(19) Europäisches Patentamt
European Patent Office
Office européen des brevets

(11) EP 4 614 624 A1

(12) # EUROPEAN PATENT APPLICATION
published in accordance with Art. 153(4) EPC

(43) Date of publication:
**10.09.2025 Bulletin 2025/37**

(21) Application number: **23885857.5**

(22) Date of filing: **02.11.2023**

(51) International Patent Classification (IPC):
***H01M 4/62*** *(2006.01)* ***H01M 4/36*** *(2006.01)*
***H01M 4/38*** *(2006.01)* ***H01M 10/056*** *(2010.01)*
***H01M 10/0565*** *(2010.01)*

(52) Cooperative Patent Classification (CPC):
**H01M 4/36; H01M 4/38; H01M 4/62; H01M 10/056; H01M 10/0565;** Y02E 60/10

(86) International application number:
**PCT/JP2023/039640**

(87) International publication number:
**WO 2024/096103 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 JP 2022177446**

(71) Applicants:
- **Sumitomo Chemical Company, Limited**
**Tokyo 103-6020 (JP)**
- **Kyoto University**
**Kyoto-shi, Kyoto 606-8501 (JP)**

(72) Inventors:
- **SUWA Koki**
**Niihama-shi, Ehime 792-8521 (JP)**
- **NAKAJIMA Hideto**
**Niihama-shi, Ehime 792-8521 (JP)**
- **NASARA Ralph Nicolai Vivares**
**Kyoto-shi, Kyoto 606-8501 (JP)**

(74) Representative: **Vossius & Partner Patentanwälte Rechtsanwälte mbB**
**Siebertstrasse 3**
**81675 München (DE)**

(54) # NEGATIVE ELECTRODE MATERIAL, LAMINATE, AND BATTERY

(57) A battery including: a negative electrode having a negative electrode active material layer; and a solid electrolyte layer that is in contact with the negative electrode active material layer, in which the negative electrode active material layer contains a negative electrode active material that, in a case where an alkali metal is used as a counter electrode and 0.1 V or higher is applied, occludes or releases ions of the alkali metal, and any one or both of the negative electrode active material layer and the solid electrolyte layer contain a polymer having an ability to preferentially conduct metal ions.

FIG. 1

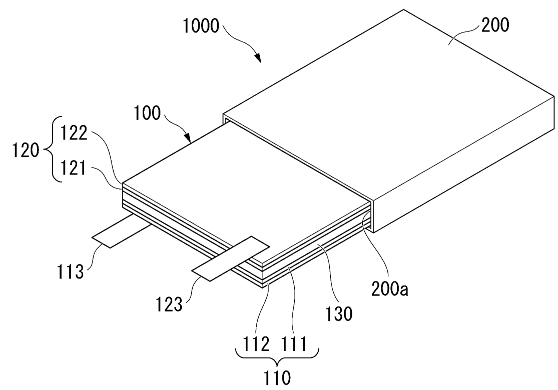


EP 4 614 624 A1

## Description

### TECHNICAL FIELD

The present invention relates to a negative electrode material, a laminate, and a battery.
Priority is claimed on Japanese Patent Application No. 2022-177446, filed on November 4, 2022, the content of which is incorporated herein by reference.

### BACKGROUND ART

In a battery such as a lithium ion battery, an electrolyte having metal ion conductivity is disposed between a positive electrode active material and a negative electrode active material. Each active material performs charging or discharging by transferring and receiving metal ions through the electrolyte. As such an electrolyte, a solid electrolyte that is highly safe and easy to handle is being studied (for example, refer to Patent Documents 1 and 2).
The solid electrolyte has a higher hardness than a known electrolytic solution, and thus can suppress the growth of lithium dendrites that may occur in the negative electrode active material. Therefore, batteries using the solid electrolyte are expected to have improved battery durability.

### Citation List

### Patent Documents

Patent Document 1: Chinese Patent No. 112448100
Patent Document 2: Chinese Patent No. 110247111

### SUMMARY OF INVENTION

### Technical Problem

On the other hand, in a battery in the related art, there is still room for improvement in a surrounding structure of a negative electrode active material in order to improve performance of a lithium secondary battery.
For example, in a negative electrode, the negative electrode active material forms a negative electrode active material layer together with a binder and a conductive material, and transfers and receives metal ions through a material in contact with the negative electrode active material, such as the binder. However, the binder in the related art does not exhibit a sufficient metal ion transference number. The "metal ion transference number" means "the ratio of the amount of metal ions that move to the total amount of all ion species that move in a system".
In addition, in order to improve the metal ion transference number in the negative electrode active material layer, the use of a solid electrolyte in combination has also been investigated. However, while the solid electrolyte known in the related art is excellent in ion conductivity and safety, the solid electrolyte is rigid and is thus likely to cause poor contact at an interface with the negative electrode active material.
The present invention has been made in view of such circumstances, and an object of the present invention is to provide a battery which secures a good ion conduction state with a negative electrode active material and has high durability. In addition, another object of the present invention is to provide a negative electrode material and a laminate, which are capable of easily securing a good ion conduction state with a negative electrode active material.

### Solution to Problem

In order to achieve the above objects, an aspect of the present invention includes the following aspects.

[1] A battery including: a negative electrode having a negative electrode active material layer; and a solid electrolyte layer that is in contact with the negative electrode active material layer, in which the negative electrode active material layer contains a negative electrode active material that, in a case where an alkali metal is used as a counter electrode and 0.1 V or higher is applied, occludes or releases ions of the alkali metal, and any one or both of the negative electrode active material layer and the solid electrolyte layer contain a polymer having an ability to preferentially conduct metal ions.
[2] The battery according to [1], in which both the negative electrode active material layer and the solid electrolyte layer

contain the polymer.

[3] The battery according to [1] or [2], in which the negative electrode active material is a phosphorus-carbon composite material containing phosphorus atoms and carbon atoms.

[4] The battery according to [3], in which a content ratio of the phosphorus atoms in the phosphorus-carbon composite material is 10% by mass or more and 95% by mass or less, a content ratio of the carbon atoms in the phosphorus-carbon composite material is 5% by mass or more and 90% by mass or less, and a ratio $WL_{620}/WL_{780}$ of a weight loss ratio $WL_{620}$ at a measurement temperature of 620°C to a weight loss ratio $WL_{780}$ at a measurement temperature of 780°C, which are obtained by thermogravimetric measurement under the following conditions, is 0.1 or more and 0.9 or less,

(thermogravimetric measurement) 10 mg of the phosphorus-carbon composite material is accurately weighed to prepare a sample, and using a thermogravimetric measuring device, a weight change when the sample is heated from 50°C to 780°C at a temperature rising rate of 10 °C/min in a nitrogen stream is measured,
(weight loss ratio) a ratio of a weight of the sample at a measurement temperature to a weight of the accurately weighed sample is defined as a weight loss ratio (% by weight) at the measurement temperature.

[5] The battery according to [4], in which a ratio $WL_{300}/WL_{600}$ of a weight loss ratio $WL_{300}$ at a measurement temperature of 300°C to a weight loss ratio $WL_{600}$ at a measurement temperature of 600°C, which are obtained by the thermogravimetric measurement, is -0.1 or more and 0.1 or less.

[6] The battery according to [4] or [5], in which a peak indicating a bond between a phosphorus atom and a carbon atom appears in an XPS spectrum.

[7] The battery according to any one of [4] to [6], in which, in an XRD profile measured using CuK$\alpha$ radiation, an intensity $I_{20}$ at $2\theta$ = 20°, an intensity $I_{26.3}$ at 20 = 26.3°, and an intensity $I_{40}$ at 20 = 40° satisfy Expressions (1) to (3),

$$|P|/|B| < 2 \quad ...(1)$$

$$P = I_{26.3} - I_{40} \quad ...(2)$$

$$B = (I_{20} - I_{40}) \times (26.3 - 40)/(20 - 40) \quad ...(3).$$

[8] The battery according to any one of [4] to [7], further including: a core particle containing phosphorus atoms; and a carbon film covering a surface of the core particle.

[9] The battery according to any one of [1] to [8], in which the polymer has at least one of an anionic functional group having an alkali metal ion as a counter cation or a functional group having an anion-trapping ability.

[10] The battery according to [9], in which the anionic functional group has at least one of a conjugate anion of a sulfonylimide group, a conjugate anion of a sulfonic acid group, or a conjugate anion of a phenolic hydroxyl group.

[11] The battery according to [9] or [10], in which the functional group having an anion-trapping ability has Lewis acidity.

[12] A negative electrode material including: a negative electrode active material; and a polymer having an ability to preferentially conduct metal ions, in which, in a case where an alkali metal is used as a counter electrode and 0.1 V or higher is applied, the negative electrode active material occludes or releases ions of the alkali metal.

[13] A laminate including: a negative electrode having a negative electrode active material layer; and a solid electrolyte layer that is in contact with the negative electrode active material layer, in which the solid electrolyte layer contains a polymer having an ability to preferentially conduct metal ions, and in a case where an alkali metal is used as a counter electrode and 0.1 V or higher is applied, a negative electrode active material contained in the negative electrode active material layer occludes or releases ions of the alkali metal.

Advantageous Effects of Invention

According to the present invention, it is possible to provide a battery which secures a good ion conduction state with a negative electrode active material and has high durability. In addition, it is possible to provide a negative electrode material and a laminate, which are capable of easily securing a good ion conduction state with a negative electrode active material.

BRIEF DESCRIPTION OF DRAWINGS

[FIG. 1] A schematic view showing an all-solid-state lithium secondary battery which is an example of a battery.
[FIG. 2] A graph showing results of thermogravimetric measurement performed on a P-C material and a P-C mixture.
[FIG. 3] XPS spectra of the P-C material and the P-C mixture.
[FIG. 4] A transmission electron microscope (TEM) photograph of the P-C material.
[FIG. 5] XRD profiles of the P-C material and the P-C mixture.
[FIG. 6] A charge/discharge curve showing results of a charge/discharge test of Example 1.
[FIG. 7] A charge/discharge curve showing results of a charge/discharge test of Comparative Example 1.
[FIG. 8] A diagram showing charge-discharge cycle characteristics of Example 1 and Comparative Example 1.
[FIG. 9] A charge/discharge curve showing results of charge/discharge tests of Example 2 and Comparative Example 2.

DESCRIPTION OF EMBODIMENTS

Hereinafter, a battery, a negative electrode material, and a laminate according to the present embodiment will be described with reference to FIGS. 1 to 5. In all the drawings below, the dimensions and ratios of each constituent element are appropriately different in order to make the drawings easier to see.

<<Battery and Laminate>>

The battery of the present embodiment has a positive electrode, a negative electrode having a negative electrode active material layer, and a solid electrolyte layer disposed between the positive electrode and the negative electrode. The solid electrolyte layer is in contact with the negative electrode active material layer. A description will be given below in order.

FIG. 1 is a schematic view showing an all-solid-state lithium secondary battery which is an example of a battery. An all-solid-state lithium secondary battery 1000 shown in FIG. 1 has a laminate 100 having a positive electrode 110, a negative electrode 120, and a solid electrolyte layer 130 and an exterior body 200 accommodating the laminate 100. In addition, the all-solid-state lithium secondary battery 1000 may have a bipolar structure in which a positive electrode active material and a negative electrode active material are disposed on both sides of a current collector. As specific examples of the bipolar structure, for example, the structures described in JP-A-2004-95400 are exemplary examples.

The positive electrode 110 has a positive electrode active material layer 111 and a positive electrode current collector 112. The positive electrode active material layer 111 contains a positive electrode active material and a solid electrolyte. In addition, the positive electrode active material layer 111 may contain a conductive material and a binder.

The negative electrode 120 has a negative electrode active material layer 121 and a negative electrode current collector 122. The negative electrode active material layer 121 contains a negative electrode active material. In addition, the negative electrode active material layer 121 may contain a solid electrolyte and a conductive material.

The laminate 100 may have an external terminal 113 that is connected to a positive electrode current collector 112 and an external terminal 123 that is connected to the negative electrode current collector 122. In addition, the all-solid-state lithium secondary battery 1000 may have a separator between the positive electrode 110 and the negative electrode 120.

The all-solid-state lithium secondary battery 1000 further has an insulator (not shown) that insulates the laminate 100 and the exterior body 200 from each other and a sealant (not shown) that seals an opening portion 200a of the exterior body 200.

As the exterior body 200, a container formed of a highly corrosion-resistant metal material such as aluminum, stainless steel, or nickel-plated steel can be used. In addition, as the exterior body 200, a container obtained by processing a laminate film having at least one surface subjected to a corrosion resistant process into a bag shape can also be used.

Examples of a shape of the all-solid-state lithium secondary battery 1000 include shapes such as a coin type, a button type, a paper type (or a sheet type), a cylindrical type, a square type, and a laminate type (pouch type).

As an example of the all-solid-state lithium secondary battery 1000, a form in which one laminate 100 is provided is shown in the drawings, but the present embodiment is not limited thereto. The all-solid-state lithium secondary battery 1000 may have a configuration in which the laminate 100 is used as a unit cell and a plurality of unit cells (laminates 100) are sealed inside the exterior body 200.

For the all-solid-state lithium secondary battery, for example, the configurations, materials, and production methods described in [0141] to [0181] of WO2022/113904A1 can be used.

<Active Material>

Examples of the positive electrode active material include a lithium-containing composite metal oxide containing lithium (Li) and at least one transition metal selected from the group consisting of V, Cr, Mn, Fe, Co, Ni, Cu, and Al. Examples of such a lithium composite metal oxide include $LiCoO_2$, $LiNiO_2$, $LiMn_2O_4$, $Li_2MnO_3$, $LiNi_xMn_yCo_{1-x-y}O_2$ [$0 < x + y$

< 1], $LiNi_xCo_yAl_{1-x-y}O_2$ [0 < x + y < 1], $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$.

The negative electrode of the lithium ion battery is not particularly limited, and may contain a negative electrode active material capable of occluding or releasing lithium ions in a case where lithium is used as a counter electrode and 0.1 V or higher is applied, and may contain a conductive auxiliary agent, a binder, and the like as necessary. Examples thereof include simple substances of elements such as Li, Si, P, Sn, Si-Mn, Si-Co, Si-Ni, In, or Au, an alloy or a composite body containing these elements, a carbon material such as graphite, and a substance in which lithium ions are inserted between layers of the carbon material.

The negative electrode active material in which an average charging potential relative to a capacity (mAh/g) during charging is 0.1 V or higher in a case where charging is performed at a charging rate of 0.2 C using lithium metal as a counter electrode can be used as a negative electrode active material included in the negative electrode of the lithium ion battery according to the present embodiment.

<Phosphorus-Carbon Composite Material>

Furthermore, the negative electrode active material is preferably a phosphorus-carbon composite material containing phosphorus atoms and carbon atoms. In the following description, the "phosphorus-carbon composite material" may be simply referred to as "P-C material".

Regarding the P-C material, a content ratio of the phosphorus atoms in the P-C material is 10% by mass or more and 95% by mass or less. In addition, a content ratio of the carbon atoms in the P-C material is 5% by mass or more and 90% by mass or less. In a case where the P-C material includes the phosphorus atoms and the carbon atoms, a sum of the content ratio of the carbon atoms and the content ratio of the phosphorus atoms in the P-C material is 100% by mass. Even in the case where the P-C material includes the carbon atoms and the phosphorus atoms, impurities that are inevitably mixed in from raw materials or a production process of the P-C material are allowed.

The P-C material may have 60% by mass or more of the entire P-C material including the phosphorus atoms and the carbon atoms, and may further include an element other than the phosphorus atoms and the carbon atoms.

Examples of the element other than the phosphorus atoms and the carbon atoms included in the P-C material include lithium, silicon, germanium, tin, aluminum, zinc, magnesium, transition metals, nitrogen, oxygen, fluorine, silicon, titanium, niobium, sulfur, and chlorine. For these elements, a metal oxide, a composite metal oxide, a metal fluoride, a metal sulfide, a metal chloride, silicon oxide, a silicate, a titanate, and an aluminate can be used as raw materials.

The content ratio of the phosphorus atoms, the content ratio of the carbon atoms, and a content ratio of any other atoms which can be further included in the P-C material can be determined by known ICP analysis.

In the P-C material, the content ratio of the phosphorus atoms is preferably 20% by mass or more, more preferably 30% by mass or more, and still more preferably 50% by mass or more. A higher content ratio of phosphorus can increase initial charge/discharge capacities of the P-C material. In addition, in the P-C material, the content ratio of the phosphorus atoms is preferably 90% by mass or less, more preferably 80% by mass or less, and still more preferably 75% by mass or less. The reason is that, in a case where the content ratio of the phosphorus atoms is too high, cycle characteristics of the P-C material deteriorate. An upper limit and a lower limit of the content ratio of the phosphorus atoms can be combined in any desired manner.

In the P-C material, the content ratio of the carbon atoms is preferably 10% by mass or more, more preferably 20% by mass or more, and still more preferably 25% by mass or more. A higher content ratio of the carbon atoms can enhance the cycle characteristics of the P-C material. In addition, in the P-C material, the content ratio of the carbon atoms is preferably 80% by mass or less, more preferably 70% by mass or less, and still more preferably 50% by mass or less. This is because, in a case where the content ratio of the carbon atom is too high, the initial charge/discharge capacities of the P-C material decrease. An upper limit and a lower limit of the content ratio of the carbon atoms can be combined in any desired manner.

Although details will be described below, the P-C material can be produced by performing ball milling on phosphorus and a carbon material. The inventors conducted detailed analysis and examination on the obtained P-C material, and confirmed that the P-C material is not a mixture simply obtained by mixing phosphorus and the carbon material, which are raw materials, but is a novel material in which phosphorus atoms and carbon atoms are chemically bonded (covalently bonded) and provide physical properties different from those of phosphorus and the carbon material of the raw materials.

Hereinafter, physical properties of the P-C material will be described in detail while comparing the P-C material to the mixture of phosphorus and the carbon material (hereinafter, sometimes referred to as "P-C mixture").

In the following description, an example of the P-C material and an example of a mixture obtained by mixing the same raw materials as those of the P-C material in a mortar are compared to each other. In the examples shown below, the raw materials of the P-C material and the raw materials of the P-C mixture both contain black phosphorus and the carbon material in a ratio of 6:4 (mass ratio). In the P-C material and the P-C mixture, cup-stacked carbon nanotubes (CSCNT) are

used as the carbon material.

[Behavior with Respect to Heat]

In the P-C material, a ratio $WL_{620}/WL_{780}$ of a weight loss ratio $WL_{620}$ at a measurement temperature of 620°C and a weight loss ratio $WL_{780}$ at a measurement temperature of 780°C, which are obtained by thermogravimetric measurement under the following conditions, is 0.1 or more and 0.9 or less.

(Thermogravimetric Measurement)

10 mg of the phosphorus-carbon composite material is accurately weighed to prepare a sample, and using a thermogravimetric measuring device, a weight change when the sample is heated from 50°C to 780°C at a temperature rising rate of 10 °C/min in a nitrogen stream is measured.

(Weight Loss Ratio)

A ratio of a weight of the sample at a measurement temperature to a weight of the accurately weighed sample is defined as a weight loss ratio (% by weight) at the measurement temperature.

FIG. 2 is a graph showing results of the above-described thermogravimetric measurement performed on the example of the P-C material and an example of the P-C mixture. FIG. 2 shows a heating temperature (°C) on a horizontal axis and the weight loss ratio (% by weight) with respect to the weight of the sample on a vertical axis. FIG. 2 is a graph showing a behavior of the P-C material indicated by reference sign A, and a behavior of the P-C mixture indicated by reference sign X.

As shown in FIG. 2, in the P-C mixture, the weight loss ratio $WL_{620}$ (indicated by reference sign X1 in FIG. 2) at the measurement temperature of 620°C and the weight loss ratio $WL_{780}$ (indicated by reference sign X2 in FIG. 2) at the measurement temperature of 780°C are both less than 58%. The P-C mixture shows a steep weight loss at a measurement temperature of about 350°C to 450°C, and at 620°C, about 60% of the weight of the sample is lost from the initial weight. In addition, after the steep weight loss at the measurement temperature of about 350°C to 450°C, almost no weight loss is observed. As a result, in the P-C mixture, the ratio $WL_{620}/WL_{780}$ between $WL_{620}$ and $WL_{780}$ exceeds 0.9.

The loss in weight is considered to correspond to a weight of black phosphorus, which is the raw material. In the P-C mixture, it is considered that the black phosphorus included in the P-C mixture is lost by heating. It is known that black phosphorus is changed to red phosphorus, which is an allotrope of black phosphorus, when heated to 125°C. In addition, it is known that red phosphorus is sublimated at 416°C under normal pressure.

In contrast, in the P-C material used for the measurement, the ratio $WL_{620}/WL_{780}$ of the weight loss ratio $WL_{620}$ (indicated by reference sign A1 in FIG. 2) at the measurement temperature of 620°C to the weight loss ratio $WL_{780}$ (indicated by reference sign A2 in FIG. 2) at the measurement temperature of 780°C is included in a range of 0.1 or more and 0.9 or less.

In addition, in the P-C material, it is preferable that a ratio $WL_{300}/WL_{600}$ of a weight loss ratio $WL_{300}$ (indicated by reference sign A3 in FIG. 2) at a measurement temperature of 300°C to a weight loss ratio $WL_{600}$ (indicated by reference sign A4 in FIG. 2) at the measurement temperature of 600°C, which are obtained by the thermogravimetric measurement described above, is included in a range of -0.1 or more and 0.1 or less.

That is, unlike the P-C mixture, the P-C material has substantially no weight loss up to the measurement temperature of 300°C, and is thermally stable at the measurement temperature of 300°C.

$WL_{620}/WL_{780}$ is preferably 0.1 or more, more preferably 0.3 or more, and still more preferably 0.5 or more. In addition, $WL_{620}/WL_{780}$ is preferably 0.9 or less and more preferably 0.8 or less. An upper limit and a lower limit of $WL_{620}/WL_{780}$ may be combined in any desired manner.

$WL_{300}/WL_{600}$ is preferably -0.1 or more and more preferably -0.08 or more. In addition, $WL_{300}/WL_{600}$ is preferably 0.1 or less and more preferably 0.08 or less. An upper limit and a lower limit of $WL_{300}/WL_{600}$ may be combined in any desired manner.

From the results shown in FIG. 2, it is considered that the black phosphorus used as the raw material in the P-C material has been altered and becomes a material that exhibits a behavior different from that of black phosphorus with respect to heat.

[Presence or Absence of P-C Bond]

The P-C material has a peak indicating a bond between a phosphorus atom and a carbon atom in an XPS spectrum. It is known that the "peak indicating a bond between a phosphorus atom and a carbon atom" appears in a range of 132 to 136 eV in the XPS spectrum. In the following description, the bond between a phosphorus atom and a carbon

atom may be simply referred to as a "P-C bond".

FIG. 3 shows XPS spectra of the P-C material and the P-C mixture. FIG. 3 shows a binding energy (eV) on a horizontal axis and the number of detected photoelectrons (counts per second (cps)) on a vertical axis. In FIG. 3, reference sign A indicates the P-C material, and reference sign X indicates the P-C mixture.

(XPS Spectrum Measurement Conditions)

The XPS spectrum is measured under the following measurement conditions.

· Measuring instrument: XPS device, ESCA-3400 (manufactured by Shimadzu Corporation)
· X-ray source: Mg K$\alpha$ radiation (20 mA, 10 kV)

In a case where a peak is detected in the range of 132 to 136 eV, it is determined that the P-C bond is present.

As shown in FIG. 3, it can be seen that in the P-C mixture, no peak indicating the P-C bond is detected in the range of 132 to 136 eV, while a peak indicating the P-C bond (indicated by reference sign $\alpha$) is detected in the P-C material.

From the results shown in FIG. 3, it is considered that the P-C material is a material having chemical bonds between the phosphorus atoms and the carbon atoms.

[External Appearance]

The P-C material includes a core particle containing phosphorus atoms, and a carbon film covering a surface of the core particle.

FIG. 4 is a transmission electron microscope (TEM) photograph of the P-C material. As shown in FIG. 4, a particle 50 of the P-C material has a core-shell structure in which a surface of a core particle 51 including the phosphorus atom is covered with a carbon film 52.

The presence of the phosphorus atom and the carbon atom in the P-C material can be confirmed by using energy dispersive X-ray spectroscopy (EDX).

In addition, in a case where the P-C material consists of only the phosphorus atoms and the carbon atoms, the phosphorus atom, which is a heavier atom, appears darker in the TEM photograph. Therefore, based on the TEM photograph, the presence of the core-shell structure in which the phosphorus atom is included in the core particle 51 and is covered with the carbon film 52 including the carbon atom can be simply determined.

(Imaging Conditions of TEM Photograph)

The TEM photograph is taken under the following imaging conditions.

· TEM device: Transmission electron microscope H-9000NAR (manufactured by Hitachi, Ltd.)
· Field of view: Up to 500 nm $\times$ 500 nm The photograph is taken with at least a part of the particles of the P-C material within the field of view.

The P-C material preferably has the above-described core-shell structure in addition to satisfying the requirements for [Behavior with Respect to Heat] described above.

[Crystalline State]

FIG. 5 shows X-ray diffraction (XRD) profiles of the P-C material and the P-C mixture. FIG. 5 shows a diffraction angle ($2\theta$, °) on a horizontal axis and a diffraction X-ray intensity (a.u.) on a vertical axis. In FIG. 5, reference sign A indicates the P-C material, and reference sign X indicates the P-C mixture.

(XRD Profile Measurement Conditions)

The XRD profile is measured under the following measurement conditions.

· Measuring instrument: Sample horizontal type multipurpose X-ray diffractometer Ultima IV (manufactured by Rigaku Corporation)
· X-ray source: Cu K$\alpha$ radiation
· Measurement range ($2\theta$): 10° to 90°
· Scanning speed: 4°/min

· Sampling: 0.02°
· Voltage: 40 kV, current: 40 mA

As shown in FIG. 5, in the P-C mixture, each of the carbon material and black phosphorus has a certain crystallinity and shows a diffraction peak. Contrary to this, in the P-C material, no diffraction peak observed in the P-C mixture is observed, and only noise is confirmed in the entire measurement range. That is, from the results shown in FIG. 5, it is considered that, in the P-C material, the carbon material used as the raw material either loses crystallinity and becomes amorphous, or has become a carbon material so fine that a crystalline state cannot be confirmed.

Here, in a case where the XRD profile is measured for the P-C material under the above-described conditions, an intensity $I_{20}$ at $2\theta = 20°$, an intensity $I_{26.3}$ at $2\theta = 26.3°$, and an intensity $I_{40}$ at 20 = 40° in the XRD profile measured under the above-described conditions satisfy Relationship Expressions (1) to (3).

$$|P|/|B| < 2 \quad ...(1)$$

$$P = I_{26.3} - I_{40} \quad ...(2)$$

$$B = (I_{20} - I_{40}) \times (26.3 - 40)/(20 - 40) \quad ...(3)$$

In a case where the XRD profile is measured for the carbon material, which is the raw material, a peak of the carbon material appears at 20 = 26.3° corresponding to a peak of graphite (002). On the other hand, in an XRD profile of a normal carbon material, there is no peak at $2\theta = 20°$ or 20 = 40°. Therefore, in Expression (1) above, the state of the carbon material can be determined by setting $2\theta = 40°$, at which no peak of the carbon material is present, as a reference point, and comparing an intensity at the reference point in the XRD profile and an intensity at a position (20 = 26.3°) at which the peak of the carbon material of the raw material is present.

"P" represented by Expression (2) above is a difference between the intensity $I_{40}$ at the reference point and the intensity $I_{26.3}$ at the position at which the peak of the carbon material is present, and indicates a difference in the peak from the reference point.

"B" represented by Expression (3) above indicates a baseline intensity at 20 = 26.3°, which is estimated from two positions (20 = 20° and $2\theta = 40°$) where no peak is present.

From a ratio (|P|/|B|) between absolute values of P and B represented by Expression (1) above, the ratio between the baseline intensity and the peak intensity from the reference point is obtained. A |P|/|B| of 2 or more indicates the presence of a peak of the carbon material.

On the other hand, when |P|/|B| is less than 2 and Expression (1) is satisfied, it can be determined that the peak of the carbon material is reduced and the crystallinity of the carbon material is lowered to make the carbon material amorphous or to make the carbon material so fine that the crystalline state of the carbon material cannot be confirmed. Therefore, it is preferable that the P-C material satisfies Relationship Expressions (1) to (3) above, in addition to satisfying the requirements for [Behavior with Respect to Heat] described above.

As described above, the P-C material is a novel material that differs from the mixture obtained by mixing phosphorus (black phosphorus in FIGS. 2 to 5) and the carbon material as the raw materials in behavior with respect to heat, bonding state, external appearance, and crystalline state.

<Method of Producing Phosphorus-Carbon Composite Material>

As described above, the P-C material can be produced by a production method that includes a step of compositing the carbon material and phosphorus through a mixing and grinding process accompanied by compression.

In the above-described production method, as the carbon material which is the raw material, at least one selected from the group consisting of amorphous carbon, graphite, porous carbon, mesocarbon microbeads (MCMB), fullerenes, carbon nanotubes, graphene, graphene oxide, carbon nitride ($C_3N_4$), and layered carbon nanofibers (carbon nanofibers platelets) can be used. All of these carbon materials have a graphite structure.

Examples of the amorphous carbon include carbon black (CB), acetylene black (AB), Ketjen black, hard carbon, and soft carbon.

Examples of the fullerenes include $C_{60}$, $C_{72}$, and $C_{84}$.

Examples of the carbon nanotubes include single-walled carbon nanotubes (SWCNT), multi-walled carbon nanotubes (MWCNT), cup-stacked carbon nanotubes (CSCNT), and carbon nanofiber vapor grown carbon fibers (VGCF). These have a structure (one-dimensional structure) extending in one axial direction.

The graphene, the graphene oxide, the carbon nitride ($C_3N_4$), and the layered carbon nanofibers (carbon

nanofibers platelets) have a structure (two-dimensional structure) that spreads in a planar direction.

In the carbon material, an end portion (edge site) of the graphite structure has higher activity than a portion other than the edge. Therefore, it is assumed that most of the P-C bonds are formed at the edge sites of the carbon material. Therefore, from the viewpoint of facilitating the formation of the P-C bonds, it is preferable that the carbon material to be used is a material having many edge sites.

Examples of the carbon material having many edge sites include CSCNT, graphite, mesocarbon microbeads (MCMB), graphene, graphene oxide, carbon nitride ($C_3N_4$), and layered carbon nanofibers. Among these, as the carbon material, CSCNT is preferable.

In addition, in the above-described production method, any known phosphorus allotropes can be used as phosphorus as the raw material. Phosphorus is preferably black phosphorus, which is the most chemically stable and a good conductor of electricity among the phosphorus allotropes.

In the above-described production method, the "mixing and grinding process accompanied by compression" is a process of applying a compression force to a plurality of kinds of powder raw materials to mix and grind the raw materials. It is considered that, by performing the mixing and grinding process accompanied by compression on the carbon material and phosphorus, a strong impact force is applied to the carbon material and phosphorus, and thus a chemical change that cannot be obtained in a normal mixture occurs while the raw material powders are mixed and ground. As a result, it is considered that a P-C material in which a P-C bond that is not present in the raw material is formed and a crystalline state that is observed in the raw material is not observed is obtained as a product.

The "mixing and grinding process accompanied by compression" may be performed until a peak derived from the raw material disappears in the XRD profile of the mixed material. Alternatively, the "mixing and grinding process accompanied by compression" may be performed until the occurrence of the P-C bond can be confirmed in the XPS spectrum of the mixed material.

Examples of a processing device (grinder) capable of performing the mixing and grinding process accompanied by compression include a roller mill, a jet mill, a hammer mill, a pin mill, a disk mill, a rod mill, a ball mill, a vibratory mill, an attritor, and a beads mill. In the production of the P-C material, it is preferable to use a stirred type grinder equipped with a grinding container and a rotating body, particularly from the viewpoint that mixing and grinding can be performed at the same time. Examples of the stirred type grinder include a pin mill, a disk mill, a rod mill, a ball mill, a vibratory mill, an attritor, and a beads mill.

Furthermore, as the above-described processing device, a medium-stirred type grinder is preferable because the raw material powders can be mixed and ground and a strong impact force can be applied to the carbon material and phosphorus at the same time. Examples of the medium-stirred type grinder include a ball mill, a vibratory mill, an attritor, and a beads mill. Among these, a ball mill is a particularly preferable grinder from the viewpoint that property conditions can be easily controlled.

It is considered that, in ball milling, first, the pulverization of phosphorus and the decomposition of carbon material occur, followed by the formation of P-C bonds. In these ball milling procedures, phosphorus becomes the core particles described above.

Thereafter, it is considered that the above-described carbon film is formed around the core particles including the phosphorus atoms to be composited, whereby the P-C material is obtained.

During ball milling, production conditions can be controlled by adjusting a rotation speed of a ball mill device, the amount of media (balls) with respect to the raw materials (ball powder ratio), and a mixing time. That is, by adjusting conditions such as increasing the rotation speed of the ball mill device, increasing the amount of media with respect to the raw materials, and increasing the mixing time, the mixing of phosphorus and the carbon material is promoted, and the P-C material is easily obtained. By controlling the above-described production conditions, the generation of the P-C bond is promoted, and a P-C material satisfying a $WL_{620}/WL_{780}$ of 0.1 or more and 0.9 or less is easily produced.

Balls are grinding media for grinding a metal material. A diameter of the balls is an average particle diameter of the balls. The balls flow at a high speed in the grinding container by the rotation of the grinding container itself within the grinder, and collide with the powder raw materials including the carbon material and phosphorus, thereby grinding the powder raw materials into particles having a smaller average particle diameter. It is preferable that in a grinding step, the grinding container and beads are not excessively worn. Therefore, a shape of the ball is preferably spherical or ellipsoidal.

The diameter of the balls is preferably larger than an average particle diameter of the P-C material after the grinding. By using such balls, a large grinding energy can be imparted to the metal material, so that it is possible to efficiently obtain metal particles within a short period of time. On the other hand, when the diameter of the balls is too large, re-agglomeration of the P-C material is promoted, and the P-C material having a wide particle size distribution is generated.

The diameter of the balls is preferably 0.1 to 10 mm and more preferably 1 to 10 mm. In a case where the diameter of the balls is within this range, the generation of the P-C bond can be promoted, and the re-agglomeration can be suppressed. The diameters of the balls to be put into the grinding container may be uniform or different from each other.

Examples of a material of the ball include glass, agate, alumina, zirconia, stainless steel, chrome steel, tungsten

carbide, silicon carbide, and silicon nitride. Among these, zirconia is preferable because of its relatively high hardness, which makes it resistant to wear, and of its relatively high specific gravity, which makes it possible to obtain a high grinding energy. By using these balls, the raw material powders of the P-C material can be efficiently ground.

A weight ratio of the balls to the raw material powders of the P-C material is referred to as a ball-to-powder ratio. By increasing the ball-to-powder ratio, a strong impact force can be imparted to the raw material powders of the P-C material at a high frequency, so that the generation of the P-C bond can be further promoted. When the ball-to-powder ratio is too high, the amount of the P-C material produced per unit operation is reduced. Therefore, a preferable ball-to-powder ratio is 0.5 to 500, more preferably 1 to 200, and still more preferably 10 to 200.

In addition, after the ball milling is ended, the balls are separated from the P-C material using a filter or the like.

The fact that the above-described P-C material is obtained by the ball milling can be confirmed by measuring an XRD profile of the mixed material and confirming that a peak derived from the raw material disappears as shown in FIG. 5. A duration of the ball milling may be determined by conducting a preliminary experiment on a correspondence between the mixing time and the time until the peak derived from the raw material disappears. In other words, the ball milling may be performed until the peak derived from the raw material disappears in the XRD profile of the mixed material.

Alternatively, the P-C material may be confirmed by measuring an XPS spectrum of the mixed material and observing the presence of the P-C bond as shown in FIG. 3. In this case, the duration of the ball milling may be determined by conducting a preliminary experiment on a correspondence between the mixing time and the time until the P-C bond is generated. In other words, the ball milling may be performed until the generation of the P-C bond can be confirmed in the XPS spectrum of the mixed material.

In the ball milling, the carbon material or phosphorus is interposed between the media colliding with each other or between the media and the ball mill container, so that a strong local impact (pressure) is applied to the carbon material or phosphorus. The details are not clear, but it is considered that, by applying such an impact, a chemical change that cannot be obtained in a normal mixture occurs, a P-C bond which is not present in the raw material is formed, and a P-C material that does not have the crystalline state observed in the raw materials is obtained.

Therefore, according to the production method of the present embodiment, the above-described P-C material can be easily produced by performing the mixing and grinding process accompanied by compression on the carbon material and phosphorus.

In addition, according to the production method of the present embodiment, the above-described P-C material can be easily produced by a simple method of performing ball milling on the carbon material and phosphorus.

<Polymer Having Ability to Preferentially Conduct Metal Ions>

The battery of the present embodiment contains a polymer having an ability to preferentially conduct metal ions, which will be described below. In the following description, the "polymer having an ability to preferentially conduct metal ions" may be simply referred to as a "polymer".

Specifically, in the battery, any one or both of the negative electrode active material layer and the solid electrolyte layer have the polymer. In the battery, it is preferable that both the negative electrode active material layer and the solid electrolyte layer have the polymer.

The polymer is a conductor of metal ions and can be used as a solid electrolyte. The solid electrolyte has a higher hardness than a known electrolytic solution, and thus can suppress the growth of lithium dendrites that may occur in the negative electrode active material. Therefore, batteries using the solid electrolyte are expected to have improved battery durability.

In addition, the polymer exhibits a higher metal ion transference number than a typical binder. In addition, the polymer is softer than an inorganic solid electrolyte and is less likely to cause poor contact at an interface with the negative electrode active material, which is a solid.

Therefore, in a case where the negative electrode active material layer has the polymer, the negative electrode active material and the polymer are in good contact with each other inside the negative electrode active material layer, and an ion conduction state is secured. In addition, in a case where the solid electrolyte layer has the polymer, the negative electrode active material and the polymer are in good contact with each other at the interface between the negative electrode active material layer and the solid electrolyte layer, and an ion conduction state is secured. Furthermore, in a case where both the negative electrode active material layer and the solid electrolyte layer have the polymer, in addition to the above-described effects, an effect of allowing the polymers included in both the negative electrode active material layer and the solid electrolyte layer to conduct metal ions to each other can also be expected.

From these, in the battery having the polymer, a good ion conduction state is secured at the interface with the negative electrode active material, and high durability is likely to be exhibited compared to a battery using a known electrolytic solution.

In a case where the solid electrolyte layer has the polymer, a laminate of the negative electrode active material layer and the solid electrolyte layer in contact with the negative electrode active material layer corresponds to the

"laminate" of the present invention.

The polymer having an ability to preferentially conduct metal ions is, for example, a polymer in which the metal ion transference number is 0.4 or more in a case where the metal ion transference number is measured for any one of the following compositions 1 and 2 at room temperature (25°C). The metal ion transference number of the polymer may be 0.5 or more, 0.6 or more, or 0.7 or more.

(Composition 1) A composition containing 33% by mass of the polymer and 67% by mass of a nonionic plasticizer
(Composition 2) A composition containing 31.9% by mass of the polymer, a metal salt, and a nonionic plasticizer in the remaining amount, in which a metal ion concentration is 0.3 mol/L

In a case where the polymer has an anionic functional group, the metal ion contained in the composition may be a counter cation of the anionic functional group or may be added as a metal salt.

The polymer having an ability to preferentially conduct metal ions may be a polymer having an ability to preferentially conduct alkali metal ions.

Examples of the nonionic plasticizer include at least one of an organic solvent or other resins such as a fluororesin.

The organic solvent may be an aprotic solvent. The aprotic solvent may be at least one selected from the group consisting of a carbonate-based solvent, a fluorine-based solvent, and an ether-based solvent. Specific examples of the organic solvent may be specific examples of an organic solvent contained in the negative electrode material described later.

As the fluorine-based resin, a resin having a carbon chain as a main chain is preferable. The carbon chain may be formed by radical polymerization of an ethylenically unsaturated group.

The concentration of the metal ions may be prepared by adding a metal salt. For example, in a case where the metal salt is an alkali metal salt, the alkali metal salt is not particularly limited, and examples thereof include MF, MCl, MBr, MI, $MClO_4$, $MPF_6$, $MBF_4$, $M_2SO_4$, $M[(C_hF_{2h+1})SO_3]$ (h represents 0 to 3), and $M[(C_hF_{2h+1})SO_2]_2N$ (h represents 0 to 3), in which M represents an alkali metal.

In a case where the polymer has a structural unit (A) described later, M may be the same alkali metal element as the alkali metal element contained in the structural unit (A).

Examples of the polymer having an ability to preferentially conduct metal ions include a polymer including at least one of an anionic functional group (also referred to as a functional group (A)) having a metal ion as a counter cation or a functional group (also referred to as a functional group (B)) having an anion-trapping ability. A structure of the polymer is not particularly limited, and examples thereof include a polymer having a carbon chain as a main chain, where the carbon chain may be formed by radical addition polymerization of a monomer having an ethylenically unsaturated group.

(Functional Group (A), Structural Unit (A))

The metal ion which is the countercation of the functional group (A) may be at least one of an alkali metal ion or an alkaline earth metal ion, and may be an alkali metal ion. Examples of the alkali metal ion include a lithium ion, a sodium ion, a potassium ion, a rubidium ion, and a cesium ion. The alkali metal ion may be a lithium ion, a sodium ion, or a potassium ion, or may be a lithium ion or a sodium ion, or a lithium ion.

Hereinafter, a structural unit containing the functional group (A) and the metal ion which is the countercation of the functional group (A) will also be referred to as a structural unit (A). The structural unit (A) may have a structure obtained by radical addition polymerization of a monomer having an ethylenically unsaturated group.

The structural unit (A) may have, as the functional group (A), at least one selected from the group consisting of a conjugate anion of a sulfonylimide group, a conjugate anion of a sulfonic acid group, a conjugate anion of a carboxylic acid group, and a conjugate anion of a phenolic hydroxyl group. The conjugate anion of a sulfonylimide group, the conjugate anion of a sulfonic acid group, and the conjugate anion of a phenolic hydroxyl group may be included in, for example, a group having a conjugate anion of a sulfonylimide group, a group having a conjugate anion of a sulfonic acid group (sulfonate group), and a group having a conjugate anion of a phenolic hydroxyl group, which will be described below.

**In** a case where the functional group (A) is a group having a conjugate anion of a sulfonylimide group, the structural unit (A) may be a structural unit represented by Formula (A1).

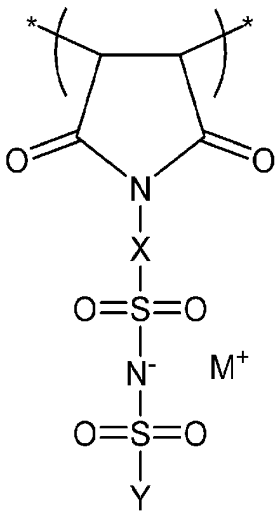

(A1)

(in Formula (A1), X is a divalent organic group having 1 to 20 carbon atoms, Y is a halogen atom or a monovalent organic group having 1 to 20 carbon atoms, M is an alkali metal element selected from Li, Na, and K, and * represents a position at which the structural unit (A1) is bonded to another structural unit)

· X

X is not particularly limited, and may be a hydrocarbon group or a group having a heteroatom, or may have a heterocyclic ring. More specifically, examples of X include a divalent group such as a hydrocarbon group and a group having a chemical structure in which one or more carbon atoms (methylene groups) in a hydrocarbon group are substituted with a linking group such as -O-, -S-, -C(=O)-, or -C(=O)O-. In a case where there are a plurality of linking groups, the linking groups are not adjacent to each other.
In addition, the divalent group may have a substituent that substitutes a hydrogen atom bonded to a carbon atom. The substituent may be a monovalent substituent, and examples thereof include a halogen atom.
The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, or a cyclic hydrocarbon group. In addition, the hydrocarbon group may be any of a saturated hydrocarbon group or an unsaturated hydrocarbon group. A substituent such as an alkyl group, a halogen atom, or an electron-withdrawing group may be bonded to a carbon atom of an aromatic ring constituting the aromatic hydrocarbon group.
The number of carbon atoms contained in X may be 1 to 15, 2 to 10, or 3 to 8.
The hydrocarbon group as X is preferably a phenylene group, an alkylene group having 1 to 8 carbon atoms, a polyoxyalkylene group, or a group in which some or all of hydrogen atoms bonded to carbon atoms contained in these groups are substituted with halogen atoms such as fluorine atoms, and more preferably a phenylene group or a substituted phenylene group substituted with an alkyl group, a halogen atom, an electron-withdrawing group, or the like. Examples of the electron-withdrawing group include a halogen atom, a sulfonic acid group or a salt thereof, a sulfonic acid ester, a nitro group, and a nitrile group.
X may be bonded to one or both of a nitrogen atom of a maleimide group and a sulfur atom of a sulfonyl group through a carbon atom contained in X.

· Y

In Formula (A), in a case where Y is a monovalent organic group, the organic group is not particularly limited and may be a hydrocarbon group or a group having a heteroatom, or may have a heterocyclic ring. More specifically, examples of Y include a monovalent group such as a hydrocarbon group and a group having a chemical structure in which one or more carbon atoms (methylene groups) in a hydrocarbon group are substituted with a linking group such as -O-, -S-, -C(=O)-, or -C(=O)O-. In a case where there are a plurality of linking groups, the linking groups are not adjacent to each other.
In addition, the monovalent group may have a substituent that substitutes a hydrogen atom bonded to a carbon atom. The substituent may be a monovalent substituent, and examples thereof include a halogen atom.

The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, or a cyclic hydrocarbon group. In addition, the hydrocarbon group may be any of a saturated hydrocarbon group or an unsaturated hydrocarbon group.

The number of carbon atoms contained in Y may be 1 to 15, 1 to 10, 1 to 8, 1 to 5, or 1 to 3.

The hydrocarbon group as Y is preferably a phenyl group, an alkyl group having 1 to 5 carbon atoms, or a group in which some or all of hydrogen atoms bonded to carbon atoms contained in these groups are substituted with halogen atoms such as fluorine atoms, more preferably a fluorinated alkyl group having 1 to 5 carbon atoms, and still more preferably a fluorinated alkyl group having 1 to 3 carbon atoms such as a trifluoromethyl group. The fluorinated alkyl group may be a fully fluorinated alkyl group.

In a case where Y is a halogen atom, the halogen atom is preferably a fluorine atom or a chlorine atom, and more preferably a fluorine atom.

($M^+$)

In Formula (A), $M^+$ is an alkali metal ion, preferably a lithium ion ($Li^+$), a sodium ion ($Na^+$), or a potassium ion ($K^+$), and more preferably a lithium ion. $M^+$ may contain two or three types of ions among $Li^+$, $Na^+$, and $K^+$, but preferably contains substantially only a single ion.

The group having a conjugate anion of a sulfonic acid group is a group having a group (that is, a $-SO_3M$ group in which M is an alkali metal) in which a hydrogen atom of the sulfonic acid group is substituted with an alkali metal.

The group having a conjugate anion of a phenolic hydroxyl group is a group having a group in which a hydroxyl group (that is, a phenolic hydroxyl group (-OH)) directly bonded to an aromatic ring has undergone alkali metalization(that is, a -OM group in which M is an alkali metal).

The structural unit (A) may be a structural unit represented by Formula (A2).

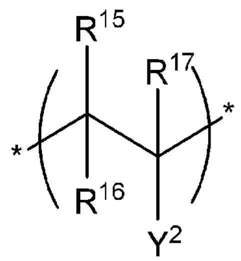

(A2)

(in Formula (A2), $Y^2$ is a group having an alkali metalized sulfonylimide group, a group having a carboxylic acid group, a group having a phenolic hydroxyl group, or a group having a conjugate anion of sulfonic acid, * represents a bonding position of the structural unit (A2) to another structural unit.

$R^{15}$ to $R^{17}$ are each independently a hydrogen atom or a monovalent substituent, or $R^{16}$ is a hydrogen atom or a monovalent substituent, and $R^{15}$ and $R^{17}$ together form a divalent substituent)

One or more of $R^{15}$ to $R^{17}$ may be a hydrogen atom, or all thereof may be hydrogen atoms.

In a case where $R^{15}$ to $R^{17}$ are a monovalent substituent, the monovalent substituent may be a monovalent organic group. The number of carbon atoms contained in the organic group may be 1 to 20, 1 to 15, 1 to 10, 1 to 5, or 1 to 3.

Examples of the organic group include a monovalent substituent such as a hydrocarbon group, a group having a chemical structure formed by substituting one or more carbon atoms (methylene groups) contained in the hydrocarbon group with a linking group such as -O-, -S-, -C(=O)-, or -C(=O)O-, and a group having a heterocyclic ring.

The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, or a cyclic hydrocarbon group. In addition, the hydrocarbon group may be any of a saturated hydrocarbon group or an unsaturated hydrocarbon group. Examples of the hydrocarbon group include a methyl group, an ethyl group, a propyl group, and a phenyl group.

The monovalent substituent for $R^{15}$ to $R^{17}$ may have an electron-withdrawing group or may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

In a case where $R^{15}$ and $R^{17}$ together form a divalent organic group, the number of carbon atoms in the divalent organic group may be 1 to 20, 1 to 15, 1 to 10, 1 to 5, or 1 to 3.

Examples of the organic group include a divalent substituent such as a hydrocarbon group, a group having a chemical structure formed by substituting one or more carbon atoms (methylene groups) contained in the hydrocarbon group with a linking group such as -O-, -S-, -C(=O)-, or -C(=O)O-, and a group having a heterocyclic ring. In addition, the divalent organic group may have a substituent that substitutes a hydrogen atom bonded to a carbon atom. Examples of the substituent include a halogen atom.

The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, or a cyclic hydrocarbon group. In addition, the hydrocarbon group may be any of a saturated hydrocarbon group or an unsaturated hydrocarbon group. Examples of the hydrocarbon group include a propylene group and a butylene group.

In a case where $Y^2$ is a group having a phenolic hydroxyl group, $Y^2$ may be a group represented by any of Formulae (A21) to (A26).

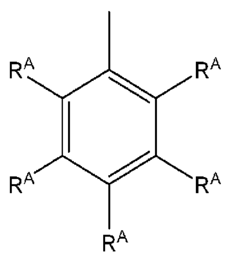

(A21)

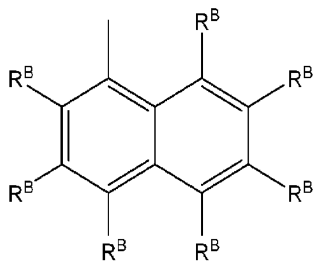

(A22)

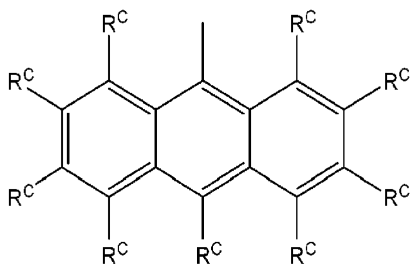

(A23)

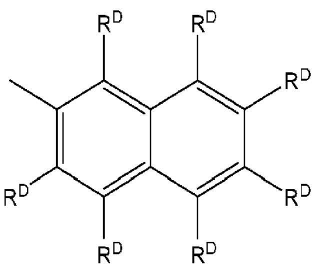

(A24)

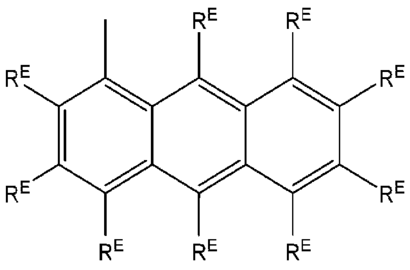

(A25)

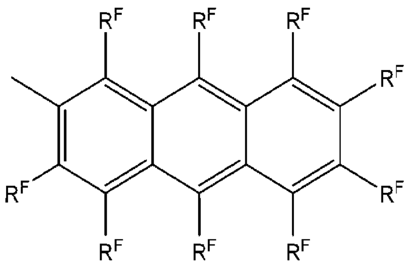

(A26)

(in Formula (A21), at least one of $R^A$ groups is an -OM group, and the remainder is a hydrogen atom or a monovalent substituent, where M is an alkali metal, and may be Li, Na, or K,

in Formula (A22), at least one of $R^B$ groups is an -OM group, and the remainder is a hydrogen atom or a monovalent substituent, where M is an alkali metal, and may be Li, Na, or K,

in Formula (A23), at least one of $R^C$ groups is an -OM group, and the remainder is a hydrogen atom or a monovalent substituent, where M is an alkali metal, and may be Li, Na, or K,

in Formula (A24), at least one of $R^D$ groups is an -OM group, and the remainder is a hydrogen atom or a monovalent substituent, where M is an alkali metal, and may be Li, Na, or K,

in Formula (A25), at least one of $R^E$ groups is an -OM group, and the remainder is a hydrogen atom or a monovalent

substituent, where M is an alkali metal, and may be Li, Na, or K, and
in Formula (A26), at least one of $R^F$ groups is an -OM group, and the remainder is a hydrogen atom or a monovalent substituent, where M is an alkali metal, and may be Li, Na, or K)

The group represented by Formulae (A21) to (A26) may have 1 to 3 -OM groups, may have 1 or 2 -OM groups, or may have 1 -OM group.
In Formulae (A21) to (A26), the monovalent substituent is preferably an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.
In addition, in Formulae (A21) to (A26), the monovalent substituent may be an organic group having 1 to 20 carbon atoms. The number of carbon atoms contained in the organic group may be 1 to 15, 1 to 10, 1 to 5, or 1 to 3.
Examples of the organic group include a monovalent group such as a hydrocarbon group, a group having a chemical structure formed by substituting one or more carbon atoms (methylene groups) contained in the hydrocarbon group with a linking group such as -O-, -S-, -C(=O)-, or -C(=O)O-, and a group having a heterocyclic ring. In addition, the monovalent group may have a substituent that substitutes a hydrogen atom bonded to a carbon atom. Examples of the substituent include a halogen atom.
The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, or a cyclic hydrocarbon group. In addition, the hydrocarbon group may be any of a saturated hydrocarbon group or an unsaturated hydrocarbon group. Examples of the hydrocarbon group include a methyl group, an ethyl group, a propyl group, and a phenyl group. The monovalent organic group may be an electron-withdrawing group itself.
In a case where $Y^2$ is a group having a conjugate anion of sulfonic acid, examples of $Y^2$ include a group represented by Formula (A3).

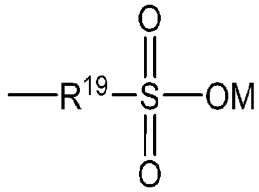

(A3)

(in Formula (A3), $R^{19}$ is a covalent bond or a divalent organic group,
where M is Li, Na, or K)

In Formula (A3), the number of carbon atoms contained in the divalent organic group may be 1 to 20, 1 to 15, 1 to 10, 1 to 5, or 1 to 3.
Examples of the organic group include a divalent substituent such as a hydrocarbon group, a group having a chemical structure formed by substituting one or more carbon atoms (methylene groups) contained in the hydrocarbon group with a linking group such as -O-, -S-, -C(=O)-, or -C(=O)O-, and a group having a heterocyclic ring.
In addition, the divalent organic group may have a substituent that substitutes a hydrogen atom bonded to a carbon atom. Examples of the substituent include a halogen atom.
The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, or a cyclic hydrocarbon group. In addition, the hydrocarbon group may be any of a saturated hydrocarbon group or an unsaturated hydrocarbon group. Examples of the hydrocarbon group include a methylene group and a phenylene group.
Examples of the group having a conjugate anion of sulfonic acid include $-SO_3M$, $-CH_2-SO_3M$, and $-C_6H_4-SO_3M$.

(Functional Group (B), Structural Unit (B))

The functional group (B) is a functional group having a function as an anion receptor. The anion receptor refers to a chemical species that captures an anion by forming an electrostatic interaction, a hydrogen bond, an acid-base complex, or the like with the anion.
The functional group (B) captures a counter anion of a metal ion in a metal salt and promotes dissociation

between the counter anion and the metal ion. Accordingly, mobility of the metal ion increases. On the other hand, since the counter anion is captured by the polymer through the structural unit (B), the mobility of the counter anion decreases. As a result, it is considered that the metal ion transference number is improved in the polymer having the functional group (B). In addition, since the mobility of the metal ion increases, the polymer having the functional group (B) also tends to improve metal ion conductivity.

A low-molecular-weight chemical species (compound or the like) that functions as an anion receptor is known, and examples thereof include compounds described in United States Patent No. 6022643, United States Patent No. 5705689, and United States Patent No. 6120941. The functional group (B) has a structure corresponding to a chemical species that functions as an anion receptor. Since the functional group is fixed to the polymer, it is considered that the captured anion can be fixed on the structure of the polymer, and the involvement of the anion in the current due to the movement of the anion can be more effectively suppressed, unlike the low-molecular-weight anion receptor in the related art.

The counter anion of the alkali metal salt does not need to be a completely ionized free anion in a case of being captured by the functional group, and may interact with the functional group and be captured in a state of forming an ionic bond or an ion pair with a metal ion.

The functional group having a function as an anion receptor may have Lewis acidity. **In** this case, the functional group can accept an unshared electron pair of an anion and form an acid-base complex to capture the anion.

Examples of such a functional group include a functional group having an electron-deficient atom. The electron-deficient atom refers to an atom that is covalently bonded to another atom but does not form an octet with electrons in the outermost shell of the atom. Examples of the electron-deficient atom include an atom belonging to Group 13 of the periodic table, and more specifically, may be at least one of aluminum and boron, or may be boron.

In addition, the functional group having a function as an anion receptor may be a group having an azaether moiety. The group having an azaether moiety is a group having an azaether compound as a substituent, and the azaether compound is a compound in which -O- of an ether compound is replaced with $-NR^E-$ (here, $R^E$ is a hydrogen atom or an organic group). The azaether moiety may be either a chain-like azaether moiety or a cyclic azaether moiety, and may have both a chain-like azaether moiety and a cyclic azaether moiety. The group having an azaether moiety may have an electron-withdrawing group in, for example, a hydrocarbon moiety.

Hereinafter, a structural unit including the functional group (B) will also be referred to as a structural unit (B). The functional group (B) may be included in, for example, a structural unit represented by Formula (B).

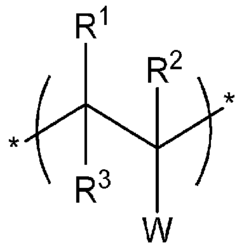

(B)

(in Formula (B), W is a functional group having a function as an anion receptor, $R^1$ to $R^3$ are each independently a hydrogen atom or a monovalent substituent, or $R^3$ is a hydrogen atom or a monovalent substituent, and $R^1$ and $R^2$ together form a divalent organic group, where * represents a position at which the structural unit (B) is bonded to another structural unit)

The polymer having an ability to preferentially conduct metal ions may include one or two or more structural units represented by Formula (B).

One or more of $R^1$ to $R^3$ may be a hydrogen atom, or all of $R^1$ to $R^3$ may be hydrogen atoms. W may be a group represented by Formula (B1) described later.

In a case where $R^1$ to $R^3$ are monovalent substituents, the monovalent substituents may be monovalent organic groups. The number of carbon atoms contained in the organic group may be 1 to 20, 1 to 15, 1 to 10, 1 to 5, or 1 to 3.

Examples of the organic group include a monovalent substituent such as a hydrocarbon group, a group having a chemical structure formed by substituting one or more carbon atoms (methylene groups) contained in the hydrocarbon group with a linking group such as -O-, -S-, -C(=O)-, or -C(=O)O-, and a group having a heterocyclic ring. In addition, the monovalent substituent may have a substituent that substitutes a hydrogen atom bonded to a carbon atom. Examples of the substituent include a halogen atom.

The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, or a cyclic hydrocarbon group. In addition, the hydrocarbon group may be any of a saturated hydrocarbon group or an unsaturated hydrocarbon group. Examples of the hydrocarbon group include a methyl group, an ethyl group, a propyl group, and a phenyl group.

In the present specification, the aromatic hydrocarbon group is a group including an aromatic portion, and may have an aliphatic portion. In addition, in the present specification, the cyclic hydrocarbon group is a group including a cyclic hydrocarbon moiety, and may include a linear or branched hydrocarbon moiety.

The monovalent substituent may have an electron-withdrawing group or may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

In a case where $R^1$ and $R^2$ together form a divalent organic group, the number of carbon atoms contained in the divalent organic group may be 1 to 20, 1 to 15, 1 to 10, 1 to 5, or 1 to 3.

Examples of the organic group include a divalent substituent such as a hydrocarbon group, a group having a chemical structure formed by substituting one or more carbon atoms (methylene groups) contained in the hydrocarbon group with a linking group such as -O-, -S-, -C(=O)-, or -C(=O)O-, and a group having a heterocyclic ring. In addition, the divalent organic group may have a substituent that substitutes a hydrogen atom bonded to a carbon atom. Examples of the substituent include a halogen atom.

The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, or a cyclic hydrocarbon group. In addition, the hydrocarbon group may be any of a saturated hydrocarbon group or an unsaturated hydrocarbon group. Examples of the hydrocarbon group include a propylene group and a butylene group.

W preferably has a group represented by Formula (B1).

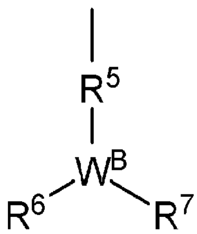

(B1)

(in Formula (B 1), $W^B$ is an atom belonging to Group 13 of the periodic table, $R^5$ is a covalent bond or a divalent organic group, $R^6$ and $R^7$ are a halogen atom or a monovalent organic group, or together form a divalent organic group, and $R^6$ and $R^7$ may be the same group or different groups from each other)

$W^B$ may be at least one of aluminum or boron, and may be boron.

In a case where $R^5$ is a divalent organic group, the number of carbon atoms contained in the divalent organic group may be 1 to 20, 1 to 15, 1 to 10, 1 to 5, or 1 to 3.

Examples of the organic group include a monovalent substituent such as a hydrocarbon group, a group having a chemical structure formed by substituting one or more carbon atoms (methylene groups) contained in the hydrocarbon group with a linking group such as -O-, -S-, -C(=O)-, or -C(=O)O-, and a group having a heterocyclic ring. In addition, the divalent organic group may have a substituent that substitutes a hydrogen atom bonded to a carbon atom.

The substituent may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

$R^5$ may be a hydrocarbon group, a halogen-substituted hydrocarbon group, or a group in which a hydrocarbon group or a halogen-substituted hydrocarbon group is bonded to $W^B$ through an ether bond. The halogen-substituted hydrocarbon group may be a group in which some or all of hydrogen atoms contained in a hydrocarbon group are substituted with halogen atoms, or may be a partially fluorinated hydrocarbon group or a fully fluorinated hydrocarbon group. $R^5$ may be a covalent bond.

In a case where $R^6$ or $R^7$ is a halogen atom, the halogen atom may be any of a fluorine atom, a chlorine atom, a bromine atom, or an iodine atom, and is preferably a fluorine atom.

In a case where $R^6$ or $R^7$ is a monovalent organic group, the number of carbon atoms contained in the monovalent organic group may be 1 to 20, 1 to 15, 1 to 10, 1 to 5, or 1 to 3.

Examples of the organic group include a monovalent substituent such as a hydrocarbon group, a group having a chemical structure formed by substituting one or more carbon atoms (methylene groups) contained in the hydrocarbon group with a linking group such as -O-, -S-, -C(=O)-, or -C(=O)O-, and a group having a heterocyclic ring.

In addition, the monovalent organic group may have a substituent that substitutes a hydrogen atom bonded to a carbon atom.

The substituent may be an electron-withdrawing group. Examples of the electron-withdrawing group include a

halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

$R^6$ or $R^7$ may be a hydrocarbon group, a halogen-substituted hydrocarbon group, or a group in which a hydrocarbon group or a halogen-substituted hydrocarbon group is bonded to $W^B$ through an ether bond.

The halogen-substituted hydrocarbon group may be a group in which some or all of hydrogen atoms contained in a hydrocarbon group are substituted with halogen atoms, or may be a partially fluorinated hydrocarbon group or a fully fluorinated hydrocarbon group.

W may be a group represented by Formula (B1a) or a group represented by Formula (B1b).

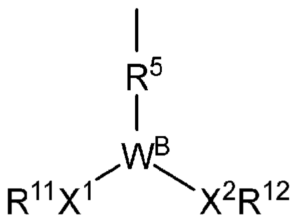

(B1a)

(in Formula (B1a), $X^1$ and $X^2$ are each an oxygen atom (ether bond) or a covalent bond, $R^{11}$ and $R^{12}$ are each a halogen atom, a monovalent hydrocarbon group, a hydrogen atom, or a monovalent halogen-substituted hydrocarbon group, and may be a halogen atom, a monovalent hydrocarbon group, or a monovalent halogen-substituted hydrocarbon group, at least one of $R^{11}$ and $R^{12}$ may be a monovalent hydrocarbon group or a monovalent halogen-substituted hydrocarbon group, and $R^{11}$ and $R^{12}$ may be the same group or different groups from each other)

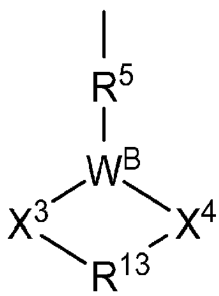

(B1b)

(in Formula (B1b), $X^3$ and $X^4$ are each an oxygen atom (ether bond) or a covalent bond, and $R^{13}$ is a divalent hydrocarbon group or a divalent halogen-substituted hydrocarbon group)

In Formula (B1a), in a case where $R^{11}$ is a halogen atom, $X^1$ may be a covalent bond, and in a case where $R^{12}$ is a halogen atom, $X^2$ may be a covalent bond.

In a case where $R^{11}$ or $R^{12}$ is a monovalent hydrocarbon group or a monovalent halogen-substituted hydrocarbon group, the number of carbon atoms in the monovalent hydrocarbon group or the monovalent halogen-substituted hydrocarbon group may be 1 to 20, 1 to 15, 1 to 10, 1 to 5, or 1 to 3.

The halogen-substituted hydrocarbon group may be a group in which some or all of hydrogen atoms contained in a hydrocarbon group are substituted with halogen atoms, or may be a partially fluorinated hydrocarbon group or a fully fluorinated hydrocarbon group.

$R^{11}$ and $R^{12}$ are each independently -F, $-CH_3$, $-C_2H_5$, $-C_3H_7$, $-C_6H_5$ (phenyl group), $-C_6H_nF_{5-n}$ (n is an integer of 0 to 4, and may be an integer of 0 to 3), $-CF_3$, $-CH_2CF_3$, $-CH_2CF_3F_7$, $-CH(CF_3)_2$, $-C(CF_3)_2-C_6H_5$, $-C(CF_3)_3$, or $-C_6H_n(CF_3)_{5-n}$ (n is an integer of 0 to 4, and may be 1 or 2).

In Formula (B1b), the number of carbon atoms contained in the divalent hydrocarbon group or the divalent halogen-substituted hydrocarbon group may be 1 to 20, 1 to 15, 2 to 10, or 3 to 8.

The halogen-substituted hydrocarbon group may be a group in which some or all of hydrogen atoms contained in a hydrocarbon group are substituted with halogen atoms, or may be a partially fluorinated hydrocarbon group or a fully fluorinated hydrocarbon group.

Examples of $R^{13}$ include $-C_2H_4-$, $-C_3H_6-$, $-C_4H_8-$, $-C_5H_{10}-$, $-C_6H_{12}-$, $-C_7H_{14}-$, $-C_8H_{16}-$, $-C_9H_{18}-$, and $-C_{10}H_{20}-$, in which these hydrogen atoms are partially or completely substituted with fluorine. More specifically, $-C(CH_3)_2-C(CH_3)_2-$ is preferable.

A molar ratio m of the structural unit (B) to all the structural units contained in the polymer may be 0.2 to 0.8, 0.25 to 0.75, 0.3 to 0.7, 0.35 to 0.65, or 0.4 to 0.6.

A molar ratio n of the structural unit (A) to all the structural units contained in the polymer may be 0.25 to 0.75, 0.3 to 0.7, 0.35 to 0.65, or 0.4 to 0.6.

A sum of m and n may be 1 or less, but may also be 0.95 or less. In addition, the sum of m and n may be 0.5 or more, 0.6 or more, 0.7 or more, 0.8 or more, 0.9 or more, or 0.95 or more.

A content of the structural unit (A) with respect to a total mass of the polymer may be 5% to 90% by mass, 20% to 80% by mass, 40% to 75% by mass, or 55% to 70% by mass.

A content of the structural unit (B) with respect to the total mass of the polymer may be 10% to 95% by mass, 20% to 80% by mass, 25% to 60% by mass, or 30% to 45% by mass.

A sum of the contents of the structural unit (A) and the structural unit (B) may be 50% by mass or more, 70% by mass or more, 90% by mass or more, or 95% by mass or more with respect to the total mass of the polymer.

The polymer may contain a structural unit (C) which is a structural unit different from both the structural unit (A) and the structural unit (B). Examples of the structural unit (C) include a structural unit represented by the following structural unit (C1) and a structural unit represented by the following structural unit (C2).

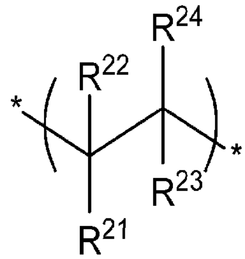

(C1)

(in Formula (C1), $R^{21}$ to $R^{24}$ are each independently a hydrogen atom, a halogen atom, or a monovalent organic group having 1 to 20 carbon atoms, where * represents a position at which the structural unit (C1) is bonded to another structural unit)

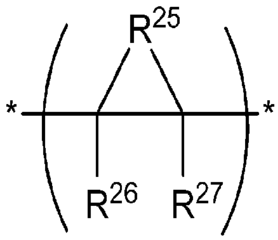

(C2)

(in Formula (C2), $R^{25}$ is a divalent organic group having 1 to 20 carbon atoms, and $R^{26}$ and $R^{27}$ are each a hydrogen atom, a halogen atom, or a monovalent organic group having 1 to 20 carbon atoms)

In addition, the structural unit (C) may include a structural unit (also referred to as a structural unit (Ap)) which is a precursor of the structural unit (A). Examples of such a structural unit include an unreacted structural unit that could not be converted into the structural unit (A) among structural units (for example, a structural unit derived from a monomer (A2') described later) which are the precursors of the structural unit (A), and an intermediate structural unit. Examples thereof include a group (that is, a group in which an alkali metal ion, which is a counter cation of the structural unit (A), is replaced with $H^+$) which is a conjugate acid of the structural unit (A), and a group in which a counter cation of the structural unit (A) is replaced with a cation other than an alkali metal ion.

Examples of the counter cation contained in the structural unit (Ap) include $NH_4^+$, an organic ammonium cation, and a metal ion such as an alkaline earth metal ion.

The polymer may contain 85 mol% or more, 90 mol% or more, or 95 mol% or more of the structural unit (A) with respect to a total amount of the structural unit (A) and the structural unit (Ap).

The polymer may contain a structural unit derived from a hydrocarbon compound having a plurality of ethylenically unsaturated groups such as butadiene and isoprene.

The polymer may have a structural unit derived from a crosslinking agent. Examples of the crosslinking agent include a compound having a plurality of ethylenically unsaturated groups in a molecule, such as hexanediol diacrylate, pentaerythritol tetraacrylate, divinylbenzene, and triethylene glycol divinyl ether.

A number-average molecular weight (Mn) of the polymer may be 5000 to 200,000, 8000 to 120,000, or 10,000 to

100,000.

A weight-average molecular weight (Mw) of the polymer may be 5000 to 300,000, 10,000 to 250,000, or 20,000 to 100,000.

A molecular weight distribution (Mw/Mn) of the polymer may be 1.0 to 3.5 or 1.3 to 2.7.

The number-average molecular weight and the weight-average molecular weight of the polymer can be measured by, for example, gel permeation chromatography.

A method of producing the polymer is not particularly limited, and examples thereof include a method of polymerizing a monomer (monomer mixture) including at least one of a monomer having an alkali metal ionized anionic functional group or a monomer having a precursor of the anionic functional group (hereinafter, referred to as a monomer (A')) and a monomer (B') having a functional group having a function as an anion receptor. The monomer may further include a monomer (C') different from the monomer (A') and the monomer (B').

The monomer (A') and the monomer (B') may have an ethylenically unsaturated group. In this case, the monomer (A') and the monomer (B') can be polymerized by radical addition polymerization. In this case, the monomer can be polymerized in the presence of an initiator. That is, a polymerization reaction may be carried out in a polymerizable composition containing a monomer and an initiator.

The monomer (A') is a monomer that induces the structural unit (A) in the polymer. Examples of the monomer (A') include a monomer (A1') represented by Formula (A1'), and a monomer (A2') represented by Formula (A2').

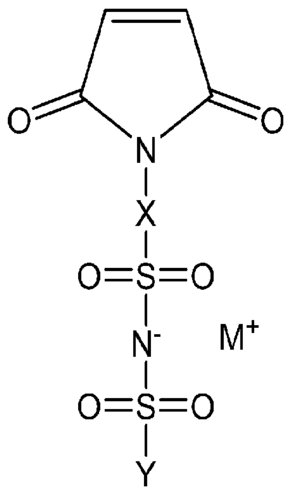

(A1')

(X, Y, and $M^+$ in Formula (A1') have the same meanings as those in Formula (A))

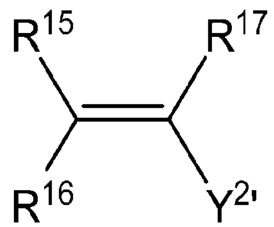

(A2')

(in Formula (A2'), $R^{15}$ to $R^{17}$ have the same meanings as $R^{15}$ to $R^{17}$ in Formula (A2), and Y2' is a group which can induce a phenolic hydroxyl group corresponding to the -OM group contained in $Y^2$ in Formula (A2) or a group having a group which can induce a sulfonic acid group corresponding to the $-SO_3M$ group contained in $Y^2$)

$Y^{2'}$ may be the same group as $Y^2$, but may be a group which is a precursor of $Y^2$. That is, $Y^{2'}$ is a group having a group that is convertible into an -OM group or a - $SO_3M$ group at the same position as the -OM group or the $-SO_3M$ group contained in $Y^2$ to be obtained.

Examples of the group that can induce a phenolic hydroxyl group corresponding to the -OM group contained in $Y^2$ include a hydrolyzable group. The phenolic hydroxyl group can be introduced into a position corresponding to the -OM

group contained in $Y^2$ by hydrolyzing the hydrolyzable group.

Examples of the hydrolyzable group include an alkoxide group and an $-OSi(R^k)_3$ group ($R^k$ is a monovalent organic group such as a hydrocarbon group). The phenolic hydroxyl group can be converted into an -OM group through a reaction with, for example, a basic salt of an alkali metal such as MOH, $M_2CO_3$, or $MHCO_3$.

Similarly, examples of the group that can induce a sulfonic acid group corresponding to the $-SO_3M$ group contained in $Y^2$ include a group that can induce a sulfonic acid group ($-SO_3H$) such as a sulfonic acid ester group and a $-SO_2Cl$ group. The sulfonic acid group can be converted into an -OM group through a reaction with, for example, a salt of an alkali metal such as MOH, $M_2CO_3$, $MHCO_3$, or an alkali metal halide.

In addition, the $-SO_2Cl$ group can also be converted into a $-SO_3M$ group through a reaction with MOH. In a case where an excess amount of MOH is used, most of the - $SO_2Cl$ groups can also be converted into $-SO_3M$ groups. In such a reaction, some of the $-SO_2Cl$ groups may become $-SO_3H$ groups, but the $-SO_3H$ groups may be converted into $SO_3M$ groups through a reaction with a base containing M separately.

In addition, $Y^{2'}$ may be a group that has the same anion moiety as $Y^2$ and forms a salt with a cation other than an alkali metal ion. In this case, the structural unit (A2) can be induced by subjecting the obtained polymer to a cation exchange reaction.

A reaction rate of Y2' (a proportion of the total amount of $Y^{2'}$ converted into $Y^2$) may be 85 mol% or more, 90 mol% or more, or 95 mol% or more.

The monomer (B') is a monomer that induces the structural unit (B) in the polymer. Examples of the monomer (B') include a monomer (B') represented by Formula (B').

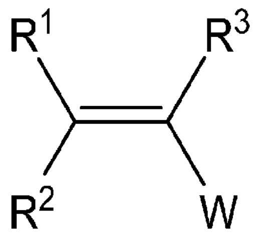

(B')

(in the formula, $R^1$ to $R^3$ and W have the same meanings as $R^1$ to $R^3$ and W in Formula (B))

A radical polymerization initiator may be either a thermal initiator or a photoinitiator. Examples of the thermal initiator include azo-based initiators such as 2,2-azobis(isobutyronitrile) (AIBN), 2,2-azobis(2-methylbutyronitrile) (AMBN), 2,2-azobis(2,4-dimethylvaleronitrile) (ADVN), 1,1-azobis(1-cyclohexanecarbonitrile) (ACHN, V-40), and dimethyl-2,2-azobisisobutyrate (MAIB); and organic peroxides such as dibenzoyl peroxide, di-8,5,5-trimethylhexanoyl peroxide, dilauroyl peroxide, didecanoyl peroxide, and di(2,4-dichlorobenzoyl) peroxide.

Examples of the photoinitiator include an oxime-based compound, a metallocene-based compound, an acylphosphine-based compound, and an aminoacetophenone compound.

As the initiator, one kind or two or more kinds may be used.

<Solid Electrolyte>

The solid electrolyte layer may include, in addition to the above-described polymer, other known solid electrolytes (ion-conductive inorganic solid electrolytes).

The ion-conductive inorganic solid electrolyte is not particularly limited, and may be an oxide (oxide-based solid electrolyte), a sulfide (sulfide-based solid electrolyte), a hydride (hydride-based solid electrolyte), a halide (halide-based solid electrolyte), or the like. The ion-conductive inorganic solid electrolyte may contain at least one of an alkali metal element or an alkaline earth metal element, and may contain an alkali metal element.

(Oxide-Based Solid Electrolyte)

Examples of the oxide-based solid electrolyte include oxides such as a perovskite-type oxide, a NASICON-type oxide, a LISICON-type oxide, and a garnet-type oxide, and oxides doped with other cations or anions.

Examples of the perovskite-type oxide include a Li-La-Ti-based oxide such as $Li_aLa_{1-a}TiO_3$ (0 < a <1), a Li-La-Ta-based oxide such as $Li_bLa_{1-b}TaO_3$ (0 < b <1), and a Li-La-Nb-based oxide such as $Li_cLa_{1-c}NbO_3$ (0 < c < 1).

Examples of the NASICON-type oxide include $Li_{1+d}Al_dTi_{2-d}(PO_4)_3$ ($0 \leq d \leq 1$). The NASICON-type oxide is an oxide represented by $Li_mM^1_nM^2_oP_pO_q$ (in the formula, $M^1$ is one or more elements selected from the group consisting of B, Al, Ga, In, C, Si, Ge, Sn, Sb, and Se, $M^2$ is one or more elements selected from the group consisting of Ti, Zr, Ge, In, Ga, Sn,

and Al, and m, n, o, p, and q are any positive numbers), and examples thereof include $Li_{1+x+y}Al_x(Ti, Ge)_{2-x}Si_yP_{3-y}O_{12}$ ($0 < x < 2$, $0 < y < 3$) (LATP).

Examples of the LISICON-type oxide include an oxide represented by $Li_4M^3O_4$-$Li_3M^4O_4$ ($M^3$ is one or more elements selected from the group consisting of Si, Ge, and Ti, and $M^4$ is one or more elements selected from the group consisting of P, As, and V).

Examples of the garnet-type oxide include a Li-La-Zr-based oxide such as $Li_7La_3Zr_2O_{12}$ (LLZ), and $Li_{7-a2}La_3Zr_{2-a2}Ta_{a2}O_{12}$ (LLZT, $0 < a2 < 1$, $0.1 < a2 < 0.8$, or $0.2 < a2 < 0.6$).

The oxide-based solid electrolyte may be a crystalline material or an amorphous material.

Examples of the oxide-based solid electrolyte include $Li_{6.6}La_3Zr_{1.6}Ta_{0.4}O_{12}$ and $Li_{0.33}La_{0.55}TiO_3$.

(Sulfide-Based Solid Electrolyte)

Examples of the sulfide-based solid electrolyte include a $Li_2S$-$P_2S_5$ based compound, a $Li_2S$-$SiS_2$-based compound, a $Li_2S$-$GeS_2$-based compound, a $Li_2S$-$B_2S_3$-based compound, a $Li_2S$-$P_2S_3$-based compound, a LiI-$Si_2S$-$P_2S_5$, a LiI-$Li_2S$-$P_2O_5$, and LiI-$Li_3PO_4$-$P_2S_5$, $Li_{10}GeP_2S_{12}$.

In this specification, the expression "-based compound" indicating the sulfide-based solid electrolyte is used as a general term for solid electrolytes primarily containing raw materials such as "$Li_2S$" and "$P_2S_5$" described before the "-based compound". Examples of the $Li_2S$-$P_2S_5$-based compound include a solid electrolyte containing $Li_2S$ and $P_2S_5$, and further containing other raw materials. The $Li_2S$-$P_2S_5$-based compound also includes a solid electrolyte having a different mixing ratio of $Li_2S$ and $P_2S_5$.

Examples of the $Li_2S$-$P_2S_5$-based compound include $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-$Li_2O$, $Li_2S$-$P_2S_5$-$Li_2O$-LiI, and $Li_2S$-$P_2S_5$-$Z_mS_n$ (m and n are positive numbers, and Z is Ge, Zn, or Ga).

Examples of the $Li_2S$-$SiS_2$-based compound include $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$SiS_2$-$Li_3PO_4$, $Li_2S$-$SiS_2$-$Li_2SO_4$, and $Li_2S$-$SiS_2$-$Li_xMO_y$ (x and y are positive numbers, and M is P, Si, Ge, B, Al, Ga, or In).

Examples of the $Li_2S$-$GeS_2$-based compound include $Li_2S$-$GeS_2$, $Li_2S$-$GeS_2$-$P_2S_5$.

The sulfide-based solid electrolyte may be a crystalline material or an amorphous material.

(Hydride-Based Solid Electrolyte)

Examples of the hydride-based solid electrolyte material include $LiBH_4$, $LiBH_4$-3KI, $LiBH_4$-$PI_2$, $LiBH_4$-$P_2S_5$, $LiBH_4$-$LiNH_2$, $3LiBH_4$-LiI, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, and $Li_4(BH_4)(NH_2)_3$.

(Halide-Based Solid Electrolyte)

Examples of the halide solid electrolyte include a compound containing Li, a metal element, and a halogen element.

The halide solid electrolyte may be a crystalline material or an amorphous material.

Examples of the ion-conductive inorganic solid electrolyte also include compounds in which some or all of Li's of the compounds mentioned as specific examples of the oxide-based solid electrolyte, the sulfide-based solid electrolyte, the hydride-based solid electrolyte, or the halide-based solid electrolyte are replaced with Na, K, Rb, or Cs.

A content of the ion-conductive inorganic solid electrolyte may be 50% by mass or more, 55% by mass or more, 60% by mass or more, 65% by mass or more, or 70% by mass or more with respect to the total amount of the electrolyte composition. In addition, the content of the ion-conductive inorganic solid electrolyte may be 95% by mass or less, 90% by mass or less, or 85% by mass or less with respect to the total amount of the electrolyte composition. In addition, the content of the ion-conductive inorganic solid electrolyte may be 50% to 95% by mass, 55% to 90% by mass, or 60% to 85% by mass with respect to the total amount of the electrolyte composition.

The content of the ion-conductive inorganic solid electrolyte may be 15% by volume or more, 25% by volume or more, 35% by volume or more, 40% by volume or more, 45% by volume or more, or 50% by volume or more with respect to the total amount of the electrolyte composition. In addition, the content of the ion-conductive inorganic solid electrolyte may be 90% by volume or less, 80% by volume or less, 70% by volume or less, or 60% by volume or less with respect to the total amount of the electrolyte composition. In addition, the content of the ion-conductive inorganic solid electrolyte may be 15 to 90% by volume, 25 to 80% by volume, or 35 to 60% by volume with respect to the total amount of the electrolyte composition. In the present specification, unless otherwise specified, % by volume is calculated based on a volume of each component contained in the electrolyte composition before mixing, and in a case where a mass proportion of each component contained in the electrolyte composition is known, % by volume may be a value obtained by dividing the mass proportion of each component by a density.

The ion-conductive inorganic solid electrolyte may be a solid electrolyte in which surfaces of particles are

subjected to a treatment. Specific examples of such treatment include a treatment of removing surface non-conductive layers with an acid, and a treatment of forming a covalent bond with an atom. The acid is not particularly limited, and examples thereof include hydrochloric acid, nitric acid, and phosphoric acid.

<Other Materials>

The solid electrolyte layer may contain a metal salt in addition to the above-described polymer. The metal salt may be at least one of an alkali metal salt or an alkaline earth metal salt, and may be an alkali metal salt. The alkali metal salt is not particularly limited, and examples thereof include MF, MCl, MBr, MI, $MClO_4$, $MPF_6$, $MBF_4$, $M_2SO_4$, $M[(C_hF_{2h+1})SO_3]$ (h is 0 to 3), and $M[(C_hF_{2h+1})SO_2]_2N$ (h is 0 to 3), in which M represents an alkali metal. In a case where the polymer has the structural unit (A), M may be the same alkali metal element as the alkali metal element contained in the structural unit (A). M may be lithium, sodium, or potassium, and may be lithium.

The solid electrolyte layer may be a composite material further including other resins such as a fluorine-based resin, fabric such as a nonwoven fabric, a porous material, and a viscosity adjusting material. As the fluorine-based resin, a resin having a carbon chain as a main chain is preferable. The carbon chain may be formed by radical polymerization of an ethylenically unsaturated group. Examples of the fluororesin include poly(vinylidene fluoride-co-hexafluoropropylene) (PVDF-HFP) and polyvinylidene fluoride (PVDF).

<<Negative Electrode Material>>

In a case where the negative electrode active material layer has the above-described polymer, the negative electrode material constituting the negative electrode active material layer corresponds to the "negative electrode material" of the present invention. The negative electrode material contains a negative electrode active material and a polymer having an ability to preferentially conduct metal ions.

[Organic Solvent]

In addition, the negative electrode material may contain an organic solvent. The organic solvent may be an aprotic solvent, and may be, for example, at least one selected from the group consisting of a carbonate-based solvent, a fluorine-based solvent, and an ether-based solvent.

Examples of the carbonate-based solvent include chain-like carbonates such as dimethyl carbonate, diethyl carbonate, and ethyl methyl carbonate; and cyclic carbonates such as ethylene carbonate, propylene carbonate, butylene carbonate, and vinylene carbonate.

Examples of the ether-based solvent include cyclic ethers such as tetrahydrofuran, 2-methyltetrahydrofuran, tetrahydropyran, and 1,3-dioxolane; and chain-like ethers such as 1,2-diethoxyethane and ethoxymethoxyethane.

Examples of the fluorine-based solvent include hydrofluorocarbons such as perfluorooctane; hydrofluoroethers such as methyl nonafluorobutyl ether and ethyl nonafluorobutyl ether; and hydrofluoroolefins such as 1,3,3,3-tetrafluoropropene.

In addition, examples of the solvent include aprotic solvents such as dimethyl sulfoxide (DMSO), and amide-based solvents such as dimethylformamide (DMF) and dimethylacetamide (DMA).

The organic solvent may be used alone or as a mixed solvent containing two or more kinds of organic solvents. In a case where a mixed solvent is used, for example, the organic solvent may be a mixed solvent containing two or more kinds of carbonate-based solvents, a mixed solvent containing two or more kinds of cyclic carbonates, or a mixed solvent including ethylene carbonate and propylene carbonate.

A content of the organic solvent may be 1% to 45% by mass, 4% to 40% by mass, or 7% to 30% by mass with respect to the total amount of an inorganic material.

The content of the organic solvent may be 1% to 70% by volume, 4% to 60% by volume, or 20% to 50% by volume with respect to the total amount of the inorganic material. A mass ratio between the polymer and the organic solvent in the inorganic material may be 1:0.5 to 1:3, or 1:1 to 1:2.5.

According to the battery having the above-described configuration, a battery that secures a good ion conduction state with the negative electrode active material and has high durability is obtained. In addition, according to the negative electrode material and the laminate having the above-described configuration, a negative electrode material and a laminate that can easily secure a good ion conduction state with a negative electrode active material are obtained.

As described above, although preferred examples of the embodiments according to the present invention have been described with reference to the accompanying drawings, the present invention is not limited to such examples. The variety of shapes, combinations, and the like of the individual constituent members described in the above-described examples are examples, and a variety of modifications are permitted based on design requirements and the like without departing from the gist of the present invention.

For example, in the above-described embodiment, the lithium ion secondary battery has been described, but an alkali metal can be adopted as the metal ion that is occluded or released by the negative electrode active material. As the alkali metal to be applied, lithium or sodium is preferable, and lithium is more preferable.

In a case where sodium is used as the alkali metal, a material that occludes or releases sodium ions in a case where metal sodium is used as a counter electrode and 0.1 V or higher is applied is used as the negative electrode active material.

It is considered that, even in a case where a metal species is changed from lithium to another alkali metal such as sodium, the above-described polymer has an ability to preferentially conduct alkali metal ions, and thus the movement of alkali metal ions is not easily inhibited, allowing the reaction with the negative electrode to occur smoothly. As a result, it is possible to provide a battery that secures a good ion conduction state with the negative electrode active material and has high durability, and a negative electrode material and a laminate that can easily secure a good ion conduction state with the negative electrode active material.

The present invention includes the following aspects.

<1> A battery including:

a positive electrode;
a negative electrode having a negative electrode active material layer;
a solid electrolyte layer that is disposed between the positive electrode and the negative electrode and is in contact with the negative electrode active material layer; and
an exterior body that accommodates the positive electrode, the negative electrode, and the solid electrolyte layer,
in which the negative electrode active material layer contains a negative electrode active material that, in a case where an alkali metal is used as a counter electrode and 0.1 V or higher is applied, occludes or releases ions of the alkali metal,
any one or both of the negative electrode active material layer and the solid electrolyte layer contain a polymer having an ability to preferentially conduct metal ions,
the negative electrode active material is a phosphorus-carbon composite material containing phosphorus atoms and carbon atoms,
a content ratio of the phosphorus atoms in the phosphorus-carbon composite material is 10% by mass or more and 95% by mass or less,
a content ratio of the carbon atoms in the phosphorus-carbon composite material is 5% by mass or more and 90% by mass or less,
a ratio $WL_{620}/WL_{780}$ of a weight loss ratio $WL_{620}$ at a measurement temperature of 620°C to a weight loss ratio $WL_{780}$ at a measurement temperature of 780°C, which are obtained by thermogravimetric measurement under the above-described conditions, is 0.1 or more and 0.9 or less, and
the polymer has at least one of an anionic functional group having an alkali metal ion as a counter cation or a functional group having an anion-trapping ability.

<2> The battery according to <1>, in which both the negative electrode active material layer and the solid electrolyte layer contain the polymer.
<3> The battery according to <1> or <2>, in which the anionic functional group has at least one of a conjugate anion of a sulfonylimide group, a conjugate anion of a sulfonic acid group, and a conjugate anion of a phenolic hydroxyl group.
<4> The battery according to <3>, in which the polymer has the anionic functional group and a functional group having an anion-trapping ability, and the functional group having an anion-trapping ability has Lewis acidity.
<11> A negative electrode material including:

a negative electrode active material; and
a polymer having an ability to preferentially conduct metal ions,
in which, in a case where an alkali metal is used as a counter electrode and 0.1 V or higher is applied, the negative electrode active material occludes or releases ions of the alkali metal,
the negative electrode active material is a phosphorus-carbon composite material containing phosphorus atoms and carbon atoms,
a content ratio of the phosphorus atoms in the phosphorus-carbon composite material is 10% by mass or more and 95% by mass or less,
a content ratio of the carbon atoms in the phosphorus-carbon composite material is 5% by mass or more and 90% by mass or less,
a ratio $WL_{620}/WL_{780}$ of a weight loss ratio $WL_{620}$ at a measurement temperature of 620°C to a weight loss ratio $WL_{780}$ at a measurement temperature of 780°C, which are obtained by thermogravimetric measurement under

the above-described conditions, is 0.1 or more and 0.9 or less, and
the polymer has at least one of an anionic functional group having an alkali metal ion as a counter cation or a functional group having an anion-trapping ability.

<12> The negative electrode material according to <11>, in which the anionic functional group has at least one of a conjugate anion of a sulfonylimide group, a conjugate anion of a sulfonic acid group, or a conjugate anion of a phenolic hydroxyl group.
<13> The negative electrode material according to <12>, in which the polymer has the anionic functional group and a functional group having an anion-trapping ability, and the functional group having an anion-trapping ability has Lewis acidity.
<21> A laminate including:

a positive electrode;
a negative electrode having a negative electrode active material layer; and a solid electrolyte layer that is disposed between the positive electrode and the negative electrode and is in contact with the negative electrode active material layer,
in which the solid electrolyte layer contains a polymer having an ability to preferentially conduct metal ions,
in a case where an alkali metal is used as a counter electrode and 0.1 V or higher is applied, a negative electrode active material contained in the negative electrode active material layer occludes or releases ions of the alkali metal,
the negative electrode active material is a phosphorus-carbon composite material containing phosphorus atoms and carbon atoms,
a content ratio of the phosphorus atoms in the phosphorus-carbon composite material is 10% by mass or more and 95% by mass or less,
a content ratio of the carbon atoms in the phosphorus-carbon composite material is 5% by mass or more and 90% by mass or less,
a ratio $WL_{620}/WL_{780}$ of a weight loss ratio $WL_{620}$ at a measurement temperature of 620°C to a weight loss ratio $WL_{780}$ at a measurement temperature of 780°C, which are obtained by thermogravimetric measurement under the above-described conditions, is 0.1 or more and 0.9 or less, and
the polymer has at least one of an anionic functional group having an alkali metal ion as a counter cation or a functional group having an anion-trapping ability.

<22> The battery according to <21>, in which both the negative electrode active material layer and the solid electrolyte layer contain the polymer.
<23> The negative electrode material according to <21> or <22>, in which the anionic functional group has at least one of a conjugate anion of a sulfonylimide group, a conjugate anion of a sulfonic acid group, or a conjugate anion of a phenolic hydroxyl group.
<24> The negative electrode material according to <23>, in which the polymer has the anionic functional group and a functional group having an anion-trapping ability, and the functional group having an anion-trapping ability has Lewis acidity.

## Examples

Hereinafter, the present invention will be described with reference to examples, but the present invention is not limited to these examples.

<Production of Each Material>

(Production of Monomer (A1) and Monomer (B1))

As described below, a monomer (A1) and a monomer (B 1) were prepared.

(Synthesis of Monomer A1)

Under a nitrogen atmosphere, trifluoromethanesulfonamide (52.5 mmol, 7.83 g, manufactured by Tokyo Chemical Industry Co., Ltd.) was dissolved in dehydrated acetonitrile (150 mL, manufactured by Kanto Chemical Co., Inc.). To this solution, lithium hydroxide (105 mmol, 2.51 g, manufactured by Tokyo Chemical Industry Co., Ltd.) and 4-acetamidobenzenesulfonyl chloride (50 mmol, 11.68 g, manufactured by Tokyo Chemical Industry Co., Ltd.) were added in

this order, and the mixture was heated under reflux for 5 hours. After cooling to room temperature, an excess amount of acetonitrile (700 mL) was added to precipitate a solid, which was then separated by filtration and washed with dichloromethane (manufactured by Kanto Chemical Co., Inc.) to obtain an intermediate 1. The yield was 97.1%. A structural formula of the intermediate 1 is shown below.

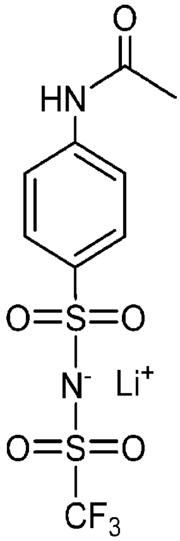

Under a nitrogen atmosphere, 5% hydrochloric acid (22.5 mL) was added to the intermediate 1 (15 mmol, 5.28 g), and the mixture was stirred at 90°C for 2 hours. After cooling to room temperature, a lithium hydroxide aqueous solution was added until a pH reached 7 or more while checking with a pH test paper or the like, and then the mixture was dried under reduced pressure to obtain a solid. The obtained solid was extracted with an acetonitrile solution and dried under reduced pressure to obtain an intermediate 2. The yield was 92.6% based on the raw materials of the above-described intermediate 1. A structural formula of the intermediate 2 is shown below.

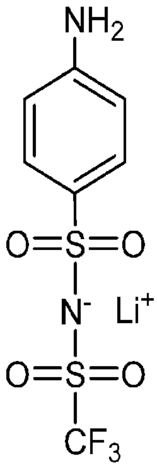

Under a nitrogen atmosphere, maleic acid anhydride (13.3 mmol, 1.30 g, manufactured by Tokyo Chemical Industry Co., Ltd.) was dissolved in dehydrated 1,4-dioxane (manufactured by Kanto Chemical Co., Inc.). To this solution, the entire amount of a solution of dehydrated tetrahydrofuran (26.4 mL, manufactured by Kanto Chemical Co., Inc.) of the intermediate 2 (13.2 mmol, 4.09 g) adjusted under a nitrogen atmosphere was added dropwise, and the solution was stirred at room temperature for 12 hours. After the reaction, precipitates were filtered and vacuum-dried at 60°C for 4 hours to obtain a solid containing an intermediate 3. A structural formula of the intermediate 3 is shown below.

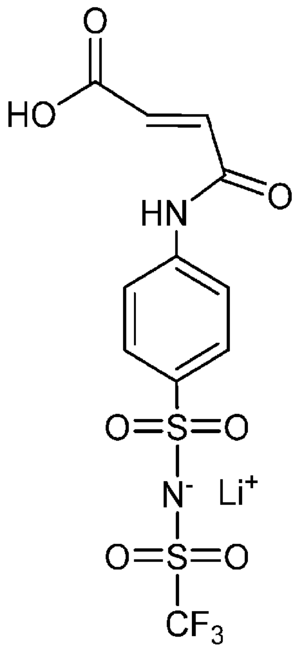

Under a nitrogen atmosphere, a solid (14.0 mmol, 5.70 g) containing the intermediate 3 and sodium acetate (13.3 mmol, 1.09 g, manufactured by Tokyo Chemical Industry Co., Ltd.) were added to acetic anhydride (12.3 mL, manufactured by Tokyo Chemical Industry Co., Ltd.), and the mixture was stirred at 70°C for 3 hours. The entire amount of the solution after the reaction was added dropwise to an excess amount of diethyl ether (manufactured by Kanto Chemical Co., Inc.) at 0°C, and precipitates were collected by filtration. Under an inert atmosphere, the precipitates were extracted with dehydrated acetonitrile (manufactured by Kanto Chemical Co., Inc.) and dried under reduced pressure to obtain a monomer A1. The yield of the entire process was 72.8%. The monomer A1 is shown below. The monomer A1 includes a conjugate anion of a sulfonylimide group as an anionic functional group.

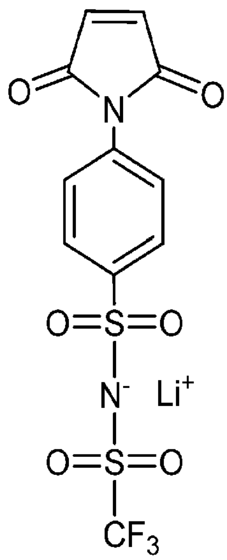

(A1)

(Synthesis of Monomer B1)

A monomer B1 (Formula (B1)) was synthesized as follows.

175 mL of diethyl ether was added to a mixture of 4.21 g (5 mmol) of anhydrous magnesium sulfate ($MgSO_4$) and 4.14 g (35 mmol) of pinacol and stirred to obtain a turbid solution. To this solution, 4-vinylphenylboronic acid (VPBA, 5.18 g (35 mmol)) was added and stirred at room temperature for 19 hours. The solution obtained by filtration was evaporated and

purified by silica gel chromatography (eluent: hexane/ethyl acetate 20/1 (volume ratio)), thereby obtaining a target monomer B1 with a yield of 92.1%. The monomer B1 is shown below. The monomer B1 contains a boron atom exhibiting Lewis acidity. A group containing a boron atom functions as a functional group having an anion-trapping ability.

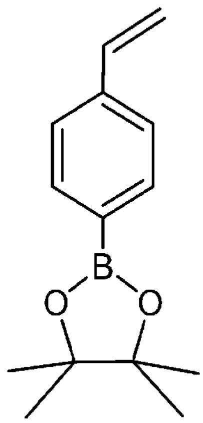

(B1)

(Production of Polymer 1 Having Ability to Preferentially Conduct Metal Ions (Polymer 1))

0.558 g of the monomer A1, 0.149 g of styrene, and 11.7 mg of azobisisobutyronitrile (AIBN) were dissolved in 13.4 mL of dehydrated acetonitrile, and the mixture was reacted at 60°C for 24 hours under a nitrogen atmosphere while checking a monomer consumption rate by adding tetralin as an internal standard substance. The polymerization solution was dialyzed in acetonitrile and vacuum-dried at 120°C to obtain 0.64 g of a polymer 1 (yield 87%). A monomer introduction ratio was A1:styrene = 52:48. The monomer introduction ratio was calculated from $^{1}$H-NMR of the copolymer.

The polymer 1 had a number-average molecular weight of Mn = $8.7 \times 10^4$, a weight-average molecular weight of Mw = $2.2 \times 10^5$, and a molecular weight distribution of Mw/Mn = 2.55.

(Production of Polymer 2 (Polymer 2) Having Ability to Preferentially Conduct Metal Ions)

A solution of each component was mixed so that 0.78 g of the monomer A1, 0.46 g of the monomer B1, and 16.4 mg of azobisisobutyronitrile (AIBN) were contained, and the mixture was reacted at 60°C for 24 hours under a nitrogen atmosphere while checking a monomer consumption rate by adding tetralin as an internal standard substance. As a solvent, dehydrated acetonitrile was used. The solution after the reaction was dialyzed in acetonitrile and vacuum-dried at 120°C to obtain 1.08 g of a polymer 2 (yield 87%). A monomer introduction ratio was A1:B1 = 48:52. The monomer introduction ratio was calculated from $^{1}$H-NMR of the copolymer.

The polymer 2 had a number-average molecular weight of Mn = $7.4 \times 10^4$, a weight-average molecular weight of Mw = $1.8 \times 10^5$, and a molecular weight distribution of Mw/Mn = 2.40.

(Production of Negative Electrode Active Material)

Black phosphorus manufactured by Rasa Industries, Ltd. and a cup-stacked carbon nanotube (CSCNT, manufactured by GSI Creos Corporation) were weighed at a mass ratio of P:C = 6:4 (total amount 0.5 g), and mixed under the following conditions using a ball mill to obtain a P-C material. A TEM image of the obtained P-C material was captured, and it was confirmed that the obtained P-C material had a core-shell structure in which a surface of a core particle containing phosphorus atoms was covered with a carbon film, as shown in FIG. 4.

(Ball Milling Conditions)

Device: Retsch PM-100
Container: 50 mL container made of $ZrO_2$

Media: 5 mmφ balls made of $ZrO_2$, 60 g
Atmosphere: Argon gas filled
Amount of sample: 0.5 g as a mixture of raw materials
Ball/powder ratio: 120 (weight ratio)
Mixing time: 12 hours

The obtained P-C material was charged at a charging rate of 0.2 C using lithium metal as a counter electrode. As a result, the P-C material had an average charging potential of 0.1 V or higher with respect to the capacity (mAh/g) during charging. It was confirmed that the obtained P-C material is a material that occludes lithium ions in a case where lithium (alkali metal) is used as a counter electrode and 0.1 V or higher is applied.

In the obtained P-C material, a content ratio of phosphorus atoms was 60% by mass, and a content ratio of carbon atoms was 40% by mass. Since airtightness of the container used during the above-described production is extremely high, it is determined that the content ratio of each atom in the P-C material is equal to the raw material ratio.

In addition, in the obtained P-C material, a ratio $WL_{620}/WL_{780}$ of a weight loss ratio $WL_{620}$ at a measurement temperature of 620°C to a weight loss ratio $WL_{780}$ at a measurement temperature of 780°C, which are obtained by thermogravimetric measurement under the following conditions, was 0.58.

(Thermogravimetric Measurement)

10 mg of the phosphorus-carbon composite material is accurately weighed to prepare a sample, and using a thermogravimetric measuring device, a weight change when the sample is heated from 50°C to 780°C at a temperature rising rate of 10 °C/min in a nitrogen stream is measured.

(Weight Loss Ratio)

A ratio of a weight of the sample at a measurement temperature to a weight of the accurately weighed sample is defined as a weight loss ratio (% by weight) at the measurement temperature.

Furthermore, in the obtained P-C material, a ratio $WL_{300}/WL_{600}$ of a weight loss ratio $WL_{300}$ at a measurement temperature of 300°C to a weight loss ratio $WL_{600}$ at a measurement temperature of 600°C, which are obtained by the thermogravimetric measurement, was -0.02.

In a case where the obtained P-C material was measured according to the above-described (XPS Spectrum Measurement Conditions), a peak indicating a bond between a phosphorus atom and a carbon atom was confirmed.

The obtained P-C material was measured according to the above-described (XRD Profile Measurement Conditions), and in the XRD profile, an intensity $I_{20}$ at 2θ = 20° was 3680, an intensity $I_{26.3}$ at 2θ = 26.3° was 3350, and an intensity $I_{40}$ at 2θ = 40° was 2008. In addition, |P|/|B| was 1.17. The P-C material showing these values satisfies the Expressions (1) to (3).

$$|P|/|B| < 2 \quad ...(1)$$

$$P = I_{26.3} - I_{40} \quad ...(2)$$

$$B = (I_{20} - I_{40}) \times (26.3 - 40)/(20 - 40) \quad ...(3)$$

<1. Confirmation of Effect of Polymer Having Ability to Preferentially Conduct Metal Ion (Negative Electrode Material)>

In the present example, in order to confirm the effect of the polymer having an ability to preferentially conduct metal ions in the negative electrode material, cycle characteristics were checked for Example 1 and Comparative Example 1 in which only the composition of the negative electrode material was changed. Comparative Example 1 includes the above-described polymer in the solid electrolyte layer, but is treated as a comparative example only in terms of determining the effect of Example 1 from the above-described viewpoint.

[Example 1]

(Preparation of Evaluation Battery)

(1) Preparation of Negative Electrode 1

The P-C material obtained in the above-described (Production of Negative Electrode Active Material), a conductive material, and a binder were weighed and mixed to obtain a mixture in a ratio of [P-C material]:[conductive material]:[binder]:[polymer 1] = 80:10:5:5 (mass ratio). The materials used are as follows. The obtained mixture corresponds to the "negative electrode material" in the present invention.

Binder: Vinylidene fluoride PVdF (KUREHA KF POLYMER #1100 (manufactured by Kureha Corporation))
Conductive material: Vapor grown carbon fiber (VGCF)

The above-described mixture and a solvent (N-methyl-2-pyrrolidone (NMP)) were kneaded using an agate mortar to prepare a negative electrode slurry. Since a viscosity of the slurry changes depending on a temperature of the slurry, the amount of the solvent (slurry concentration) was adjusted for the purpose of adjusting the viscosity. In this case, an allowable range for a content ratio of solid matter (the total of the P-C material, the conductive material, and the binder) in the negative electrode slurry was set to 30% to 60% by mass.
The negative electrode slurry was applied onto a copper foil current collector using a doctor blade, and then air-dried at 120°C for 1 hour to remove the solvent, thereby obtaining a laminate. The obtained laminate was pressed at a pressure of 10 mPa for 10 seconds and then further vacuum-dried at 120°C for 12 hours to obtain a negative electrode.
The preparation of the negative electrode slurry and the preparation of the negative electrode described above were performed in a glove box with an argon atmosphere.

(2) Preparation of Lithium Ion Secondary Battery

A lithium ion secondary battery (coin type battery R2032) of Example 1 was prepared by combining (laminating) a negative electrode 1, a counter electrode, and an electrolyte. The lithium ion secondary battery was assembled in a glove box with an argon atmosphere.
A laminate of the negative electrode 1, the counter electrode, and the electrolyte corresponds to the "laminate" in the present invention.
A battery obtained by accommodating the laminate in a coin cell housing of R2032 corresponds to the "battery" in the present invention.
As the counter electrode, a metal lithium foil was used.
As the electrolyte, an electrolyte composition including the polymer 1 produced as described above, poly(vinylidene fluoride-co-hexafluoropropylene) (PVDF-HFP), and an organic solvent (ethylene carbonate:propylene carbonate = 1:1 (volume ratio), manufactured by Kishida Chemical Co., Ltd.) at a mass ratio of 17:17:66 was used.

[Comparative Example 1]

(1) Preparation of Negative Electrode 2

A negative electrode 2 was prepared in the same manner as in the negative electrode 1 of Example 1, except that a mixture of [P-C material]:[conductive material]:[binder] = 80:10:10 (mass ratio) was used.

Binder: Vinylidene fluoride PVdF (KUREHA KF POLYMER #1100 (manufactured by Kureha Corporation))
Conductive material: Vapor grown carbon fiber (VGCF)

(2) Preparation of Lithium Ion Secondary Battery

A lithium ion secondary battery of Comparative Example 1 was prepared in the same manner as in Example 1, except that the negative electrode 2 was used.

(Measurement of Charge/Discharge Capacities)

Using the prepared lithium ion secondary battery, a charge/discharge test was carried out under the following conditions while maintaining a temperature at 25°C. Here, a theoretical capacity of phosphorus was set to 2600 mAh/g, and a 1C current at which an electrode capacity was charged or discharged for 1 hour was set to 2600 mAh/g. In the charge/discharge test, the 1C current was calculated from the mass of phosphorus included in the negative electrode. The definition of 1C in the examples is the same as below.

Minimum charging voltage: 0.001 V
Charging current: 0.2C (1C = 2600 mA/g)
Maximum discharging voltage: 2.5 V
Discharging current: 0.2C (1C = 2600 mA/g)

FIG. 6 is a charge/discharge curve showing the results of the charge/discharge test of Example 1. FIG. 7 is a charge/discharge curve showing the results of the charge/discharge test of Comparative Example 1. In both FIGS. 6 and 7, the horizontal axis represents the capacity (unit: mAh/g), and the vertical axis represents the applied voltage (unit: V). In both FIGS. 6 and 7, each charge/discharge curve from the first cycle to the third cycle is shown.
As is clear from FIGS. 6 and 7, in the battery of Example 1, there was no large difference in the charge/discharge curve from the first cycle to the third cycle, whereas in the battery of Comparative Example 1, the charging capacity and the discharging capacity were clearly decreased in a case where charging and discharging were repeated from the first cycle to the third cycle.
FIG. 8 is a diagram showing charge-discharge cycle characteristics of Example 1 and Comparative Example 1, and is a diagram showing a change in capacity from the first cycle to the tenth cycle. In FIG. 8, the horizontal axis represents the number of cycles, and the vertical axis represents the capacity (unit: mAh/g). As shown in FIG. 8, it was confirmed that the battery of Example 1 had a higher capacity retention ratio than the battery of Comparative Example 1. In Example 1 in which the polymer 1 is used, it is considered that during charging and discharging, anions are fixed by the presence of the polymer 1 and only cations (Li ions) move. Therefore, it is considered that the movement of Li ions was less likely to be inhibited and the reaction with the negative electrode occurred smoothly, resulting in the above-described difference in physical properties from Comparative Example 1.

<2. Confirmation of Effect of Polymer Having Ability to Preferentially Conduct Metal Ion (Solid Electrolyte Layer)>

In the present example, in order to confirm the effect of the polymer having an ability to preferentially conduct metal ions in the solid electrolyte layer, cycle characteristics were checked for Example 2 and Comparative Example 2 in which only the composition of the solid electrolyte layer was changed.

[Example 2]

(Preparation of Lithium Ion Secondary Battery)

A lithium ion secondary battery of Example 2 was prepared in the same manner as in Comparative Example 1, except that the polymer 1 contained in the electrolyte was changed to the polymer 2.
A mixture of the P-C material, the conductive material, the binder, and the polymer 2 corresponds to the "negative electrode material" in the present invention.
A laminate of the negative electrode produced using the negative electrode material containing the polymer 2, the counter electrode, and the electrolyte corresponds to the "laminate" in the present invention.
A battery obtained by accommodating the laminate in a coin cell housing of R2032 corresponds to the "battery" in the present invention.

[Comparative Example 2]

(Preparation of Lithium Ion Secondary Battery)

A lithium ion secondary battery (coin type battery R2032) of Comparative Example 2 was prepared by combining the negative electrode 2, a counter electrode, an electrolytic solution, and a separator. The battery was assembled in a glove box with an argon atmosphere.
As the counter electrode, a metal lithium foil was used.
As the electrolytic solution, a mixed solution obtained by adding 10% by mass of fluoroethylene carbonate (FEC) to a $LiPF_6$ solution (manufactured by Kishida Chemical Co., Ltd.) was used. As the $LiPF_6$ solution, a solution obtained by dissolving $LiPF_6$ in a mixed solvent in which ethylene carbonate (EC), diethyl carbonate (DEC), and ethyl methyl carbonate (EMC) were mixed in a volume ratio of 30:35:35 such that a concentration of $LiPF_6$ was 1 mol/L was used.
FIG. 9 is a charge/discharge curve showing the results of the charge/discharge tests of Example 2 and Comparative Example 2, and is a diagram showing a change in capacity from the first cycle to the tenth cycle. In FIG. 9, the horizontal axis represents the number of cycles, and the vertical axis represents the Coulomb efficiency (unit: %). As shown in FIG. 9, the battery of Example 2 had a significantly improved cycle retention ratio compared to the battery of Comparative Example 2 using an electrolytic solution in the related art.

It is considered that, in Example 2 in which the polymer having an ability to preferentially conduct metal ions is used, during charging and discharging, anions are fixed and only cations (Li ions) move, compared to Comparative Example 2 in which the electrolytic solution is used. Therefore, it is considered that the movement of Li ions was less likely to be inhibited and the reaction with the negative electrode occurred smoothly, resulting in the above-described difference in physical properties from Comparative Example 2.

The above results are obtained by using the phosphorus-carbon composite material as the negative electrode active material, but it is considered that the same tendency of results can be obtained even in a case where a known negative electrode active material is used as the negative electrode active material in a case where the above-described polymer is used.

From the above, it was confirmed that the present invention is useful.

REFERENCE SIGNS LIST

- 50 Particle
- 51 Core particle
- 52 Carbon film
- 100 Laminate
- 120 Negative electrode
- 121 Negative electrode active material layer
- 130 Solid electrolyte layer

## Claims

**1.** A battery comprising:

a negative electrode having a negative electrode active material layer; and
a solid electrolyte layer that is in contact with the negative electrode active material layer,
wherein the negative electrode active material layer contains a negative electrode active material that, in a case where an alkali metal is used as a counter electrode and 0.1 V or higher is applied, occludes or releases ions of the alkali metal, and
any one or both of the negative electrode active material layer and the solid electrolyte layer contain a polymer having an ability to preferentially conduct metal ions.

**2.** The battery according to Claim 1,
wherein both the negative electrode active material layer and the solid electrolyte layer contain the polymer.

**3.** The battery according to Claim 1 or 2,
wherein the negative electrode active material is a phosphorus-carbon composite material containing phosphorus atoms and carbon atoms.

**4.** The battery according to Claim 3,

wherein a content ratio of the phosphorus atoms in the phosphorus-carbon composite material is 10% by mass or more and 95% by mass or less,
a content ratio of the carbon atoms in the phosphorus-carbon composite material is 5% by mass or more and 90% by mass or less, and
a ratio $WL_{620}/WL_{780}$ of a weight loss ratio $WL_{620}$ at a measurement temperature of 620°C to a weight loss ratio $WL_{780}$ at a measurement temperature of 780°C, which are obtained by thermogravimetric measurement under the following conditions, is 0.1 or more and 0.9 or less,
(thermogravimetric measurement)
10 mg of the phosphorus-carbon composite material is accurately weighed to prepare a sample, and using a thermogravimetric measuring device, a weight change when the sample is heated from 50°C to 780°C at a temperature rising rate of 10 °C/min in a nitrogen stream is measured,
(weight loss ratio)
a ratio of a weight of the sample at a measurement temperature to a weight of the accurately weighed sample is

defined as a weight loss ratio (% by weight) at the measurement temperature.

**5.** The battery according to Claim 4,
wherein a ratio $WL_{300}/WL_{600}$ of a weight loss ratio $WL_{300}$ at a measurement temperature of 300°C to a weight loss ratio $WL_{600}$ at a measurement temperature of 600°C, which are obtained by the thermogravimetric measurement, is -0.1 or more and 0.1 or less.

**6.** The battery according to Claim 4,
wherein a peak indicating a bond between a phosphorus atom and a carbon atom appears in an XPS spectrum.

**7.** The battery according to Claim 4,
wherein, in an XRD profile measured using CuKα radiation, an intensity $I_{20}$ at 20 = 20°, an intensity $I_{26.3}$ at 20 = 26.3°, and an intensity $I_{40}$ at 20 = 40° satisfy Expressions (1) to (3),

$$|P|/|B| < 2 \quad ...(1)$$

$$P = I_{26.3} - I_{40} \quad ...(2)$$

$$B = (I_{20} - I_{40}) \times (26.3 - 40)/(20 - 40) \quad ...(3).$$

**8.** The battery according to Claim 4, further comprising:

a core particle containing phosphorus atoms; and
a carbon film covering a surface of the core particle.

**9.** The battery according to Claim 1,
wherein the polymer has at least one of an anionic functional group having an alkali metal ion as a counter cation or a functional group having an anion-trapping ability.

**10.** The battery according to Claim 9,
wherein the anionic functional group has at least one of a conjugate anion of a sulfonylimide group, a conjugate anion of a sulfonic acid group, or a conjugate anion of a phenolic hydroxyl group.

**11.** The battery according to Claim 9 or 10,
wherein the functional group having an anion-trapping ability has Lewis acidity.

**12.** A negative electrode material comprising:

a negative electrode active material; and
a polymer having an ability to preferentially conduct metal ions,
wherein, in a case where an alkali metal is used as a counter electrode and 0.1 V or higher is applied, the negative electrode active material occludes or releases ions of the alkali metal.

**13.** A laminate comprising:

a negative electrode having a negative electrode active material layer; and
a solid electrolyte layer that is in contact with the negative electrode active material layer,
wherein the solid electrolyte layer contains a polymer having an ability to preferentially conduct metal ions, and in a case where an alkali metal is used as a counter electrode and 0.1 V or higher is applied, a negative electrode active material contained in the negative electrode active material layer occludes or releases ions of the alkali metal.

FIG. 1

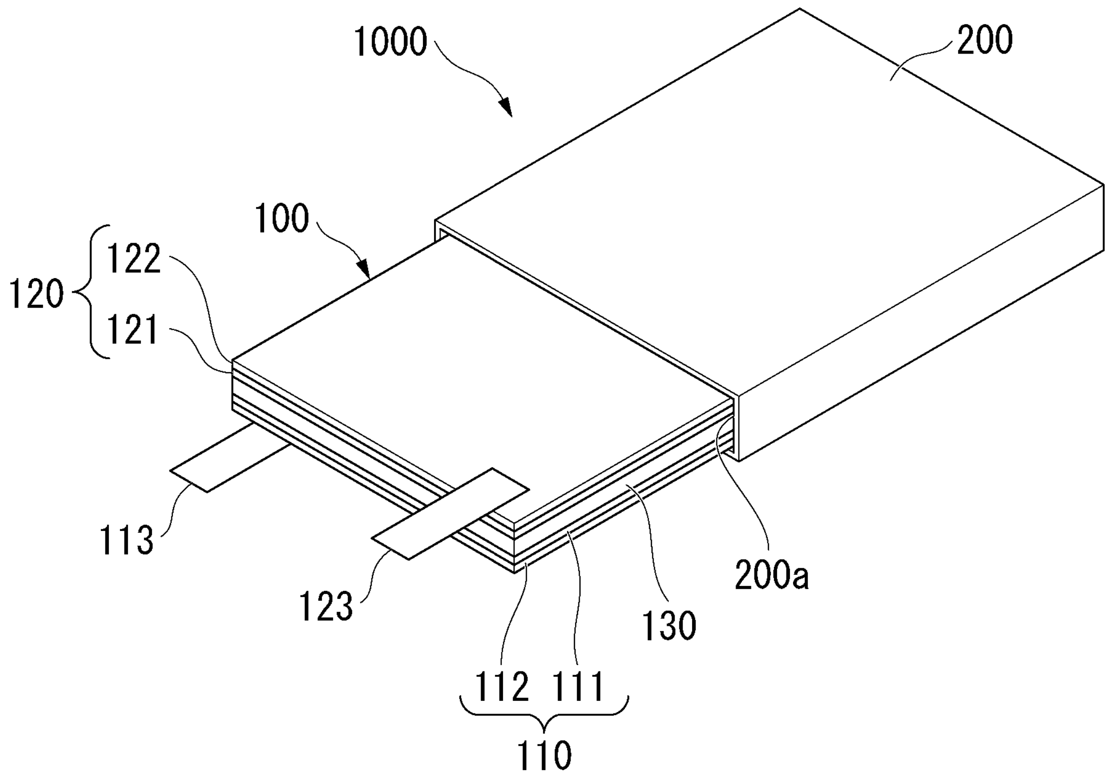
1000
200
100
120
122
121
113
123
112
111
110
130
200a

FIG. 2

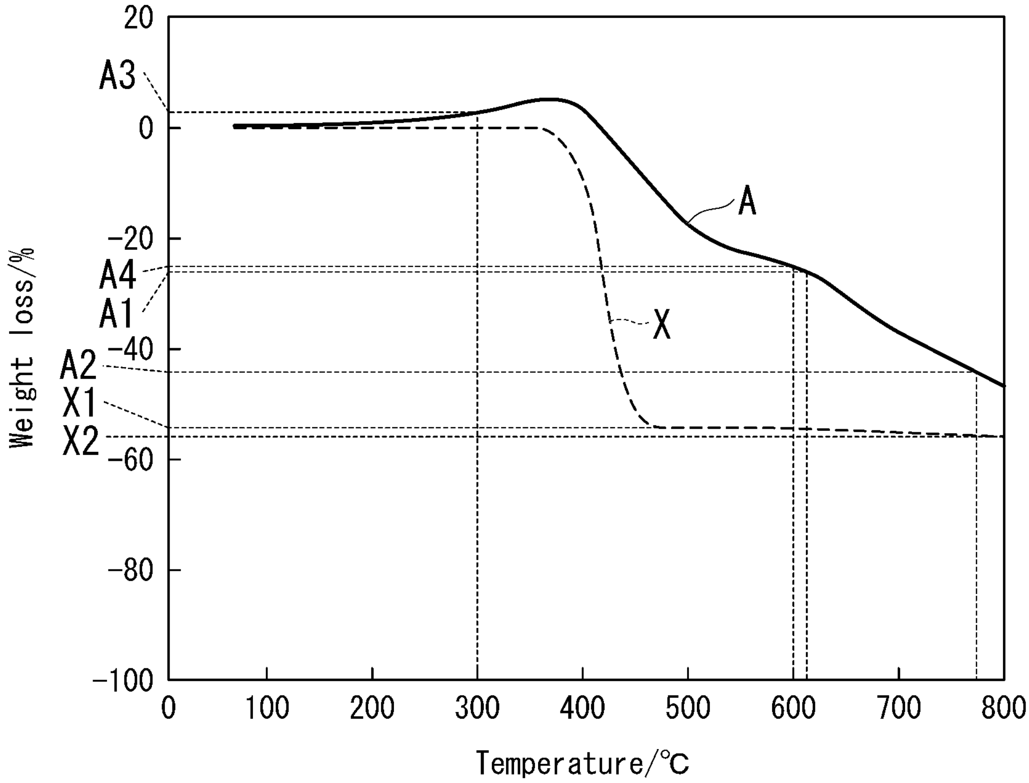
20
A3
0
-20
A4
A1
-40
A2
X1
X2
-60
-80
-100
0
100
200
300
400
500
600
700
800
A
X
Weight loss/%
Temperature/℃

FIG. 3

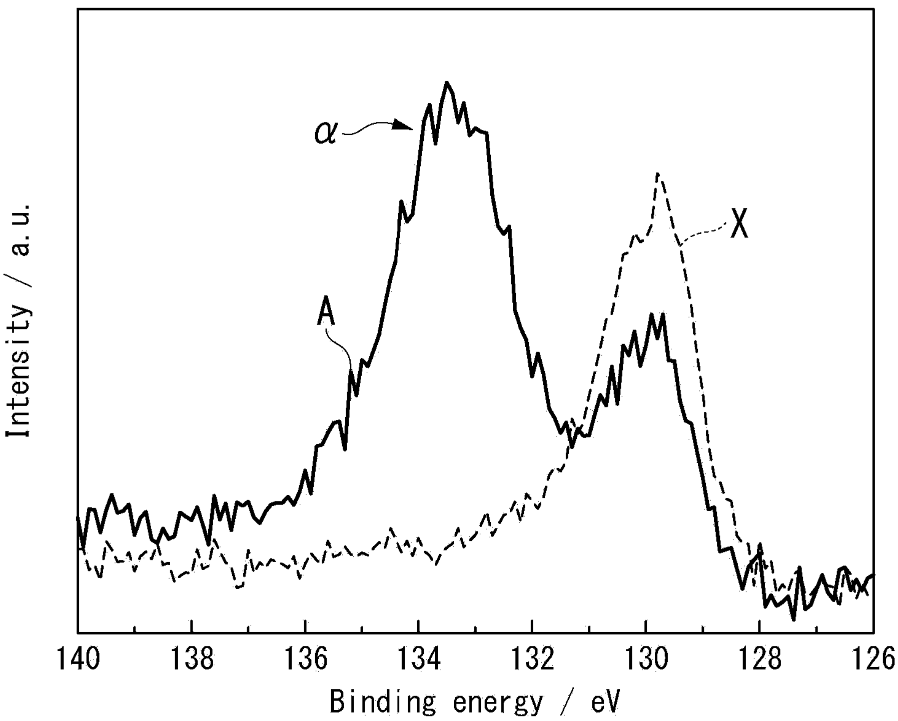
α
X
A
Intensity / a.u.
140
138
136
134
132
130
128
126
Binding energy / eV

FIG. 4

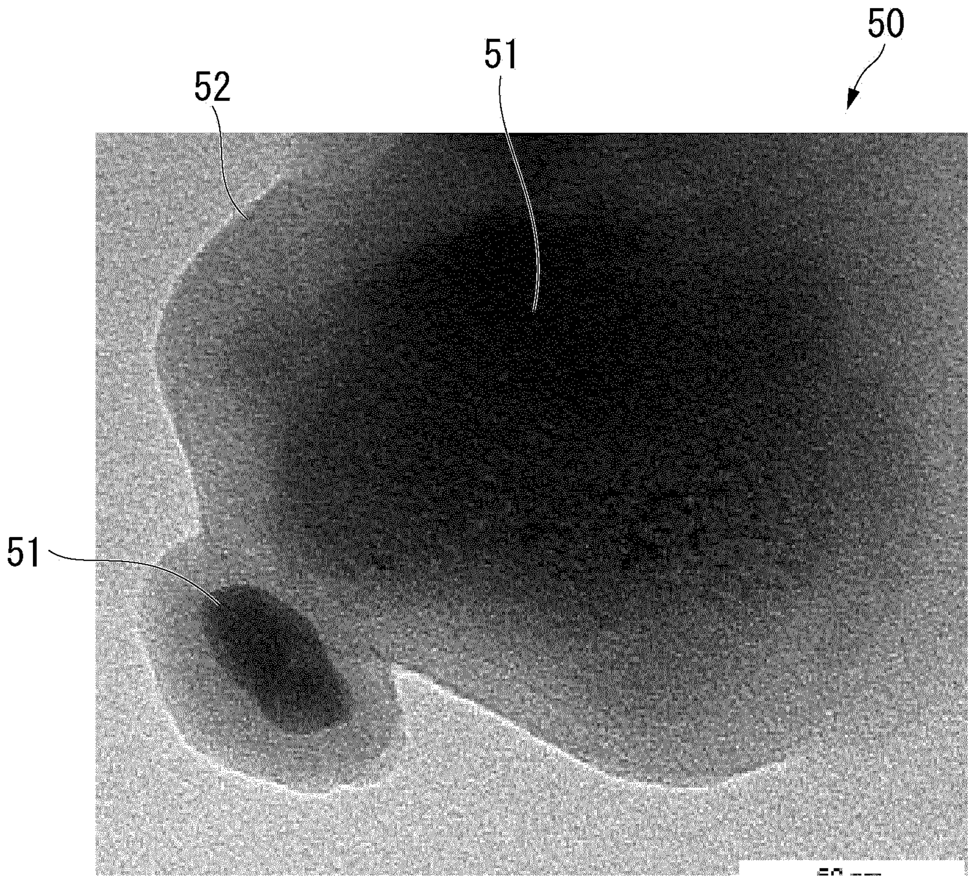
50
51
52
51

FIG. 5

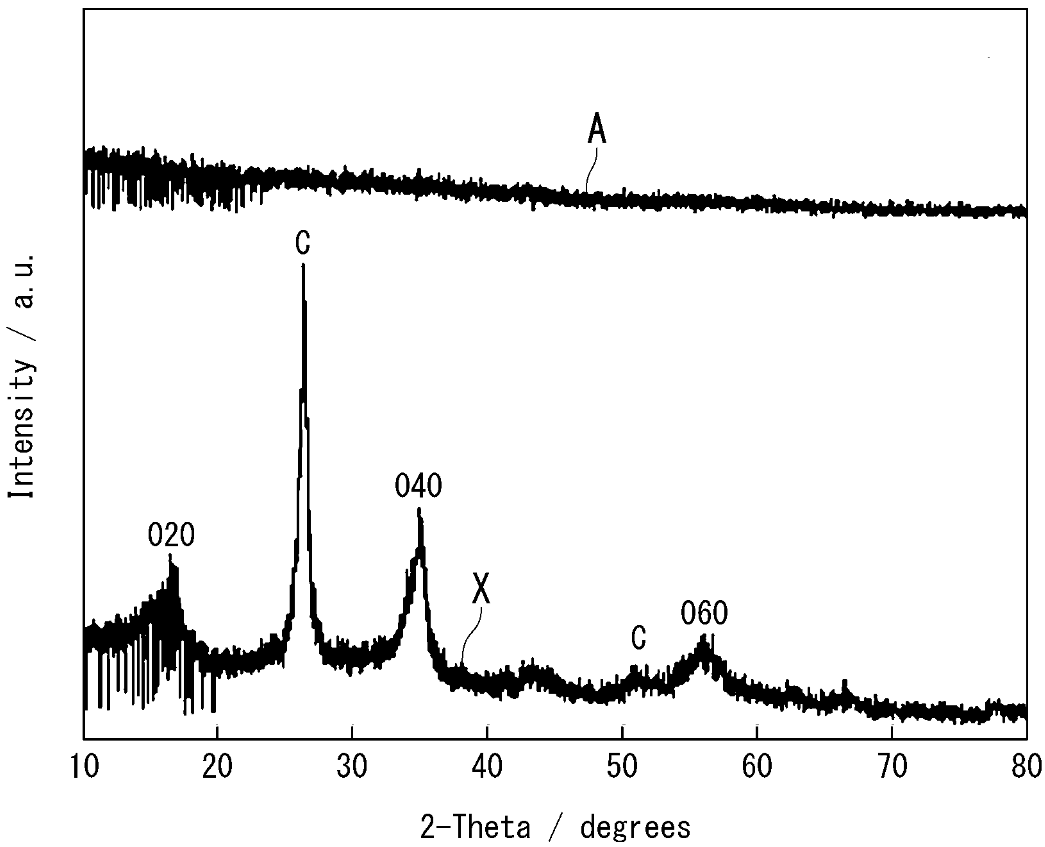
A
C
020
040
X
C
060
Intensity / a.u.
10
20
30
40
50
60
70
80
2-Theta / degrees

FIG. 6

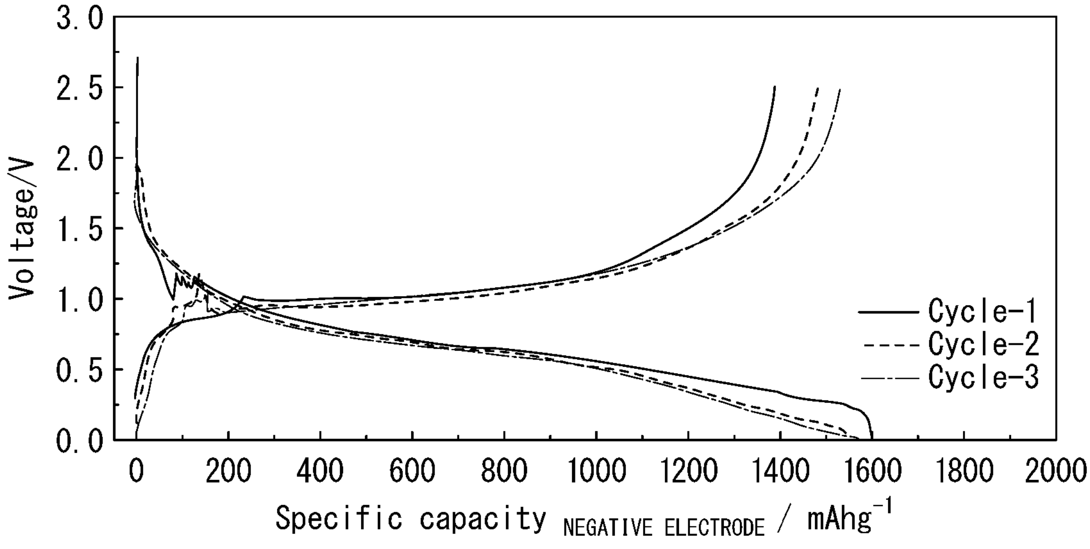
3.0
2.5
2.0
1.5
1.0
0.5
0.0
Voltage/V
Cycle-1
Cycle-2
Cycle-3
0
200
400
600
800
1000
1200
1400
1600
1800
2000
Specific capacity NEGATIVE ELECTRODE / mAhg-1

FIG. 7

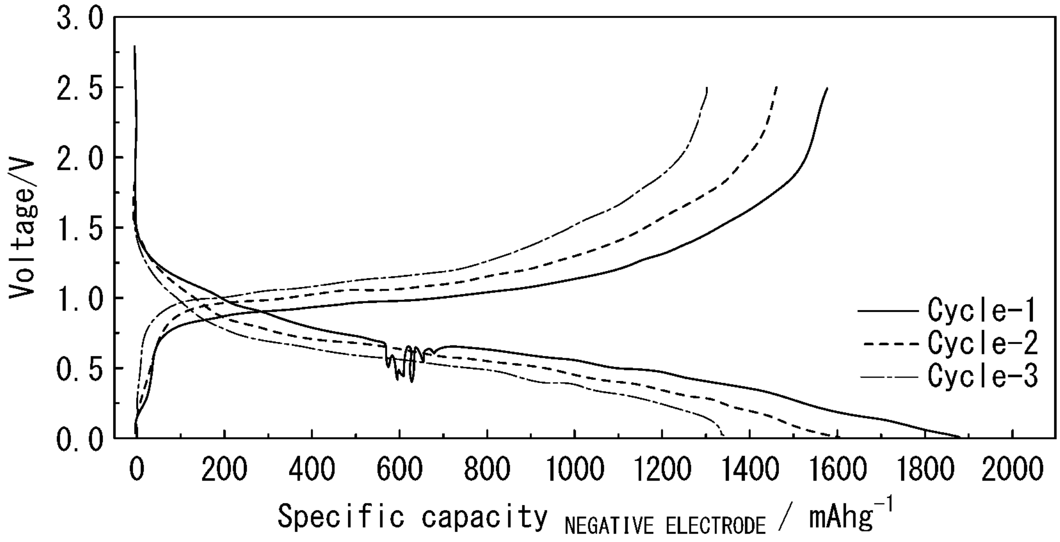
Voltage/V
3.0
2.5
2.0
1.5
1.0
0.5
0.0
0
200
400
600
800
1000
1200
1400
1600
1800
2000
Specific capacity NEGATIVE ELECTRODE / mAhg-1
Cycle-1
Cycle-2
Cycle-3

FIG. 8

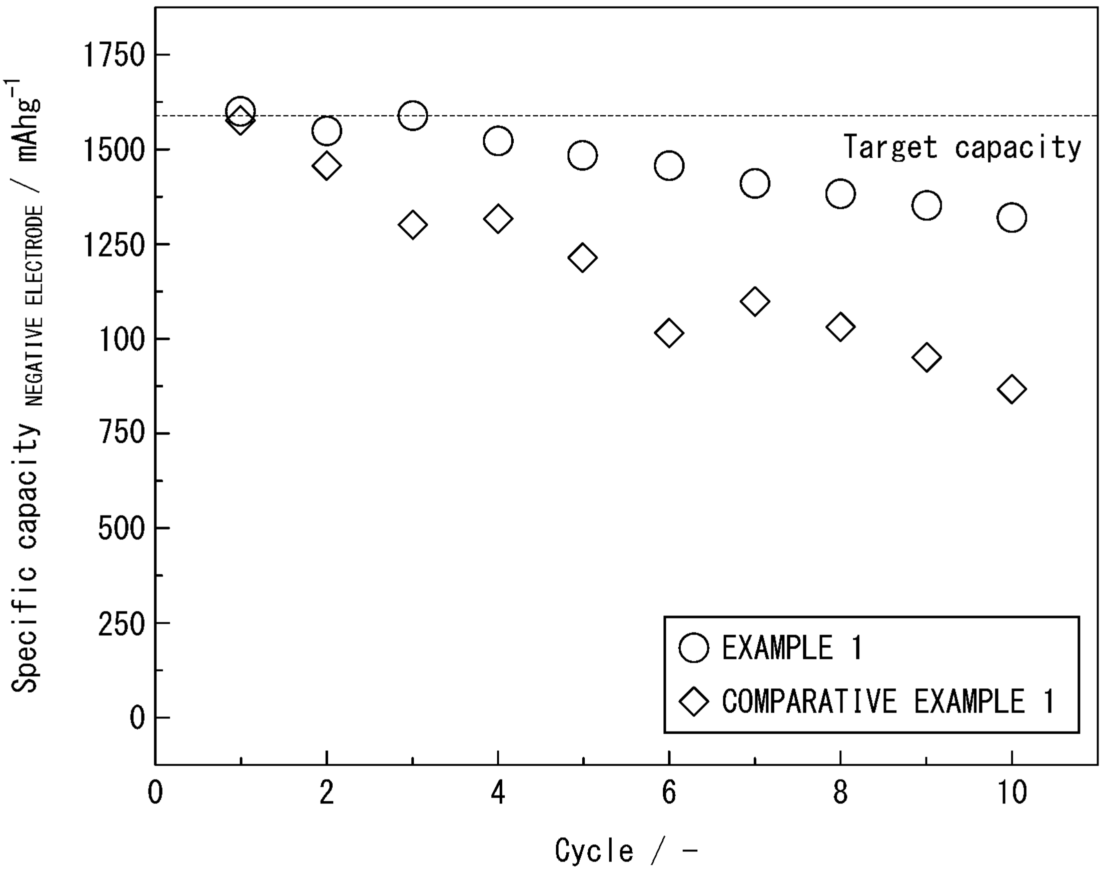
Specific capacity NEGATIVE ELECTRODE / mAhg-1
1750
1500
1250
100
750
500
250
0
0
2
4
6
8
10
Cycle / -
Target capacity
EXAMPLE 1
COMPARATIVE EXAMPLE 1

FIG. 9

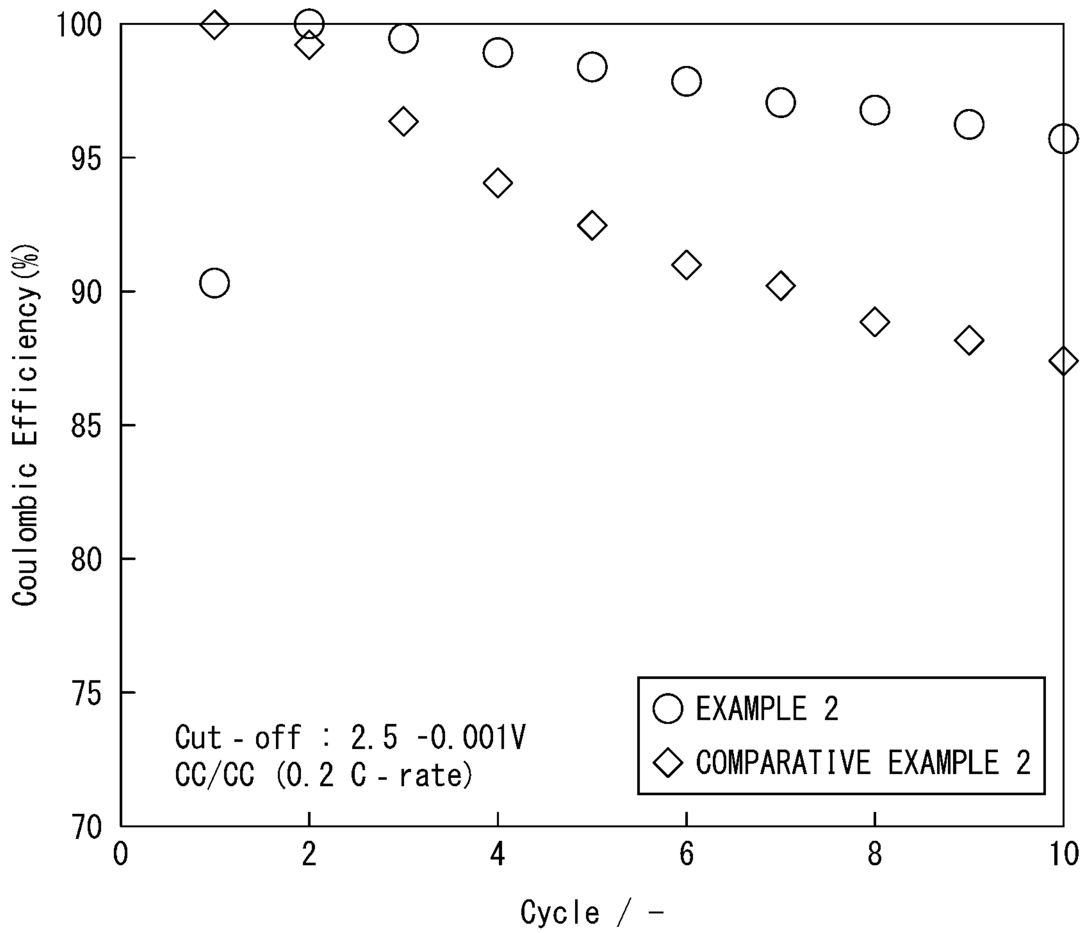
Coulombic Efficiency(%)
100
95
90
85
80
75
70
0
2
4
6
8
10
Cycle / -
Cut - off : 2.5 -0.001V
CC/CC (0.2 C - rate)
EXAMPLE 2
COMPARATIVE EXAMPLE 2

## INTERNATIONAL SEARCH REPORT

International application No. **PCT/JP2023/039640**

**A. CLASSIFICATION OF SUBJECT MATTER**

***H01M 4/62***(2006.01)i; ***H01M 4/36***(2006.01)i; ***H01M 4/38***(2006.01)i; ***H01M 10/056***(2010.01)i; ***H01M 10/0565***(2010.01)i
FI: H01M4/62 Z; H01M4/36 A; H01M4/38 Z; H01M10/056; H01M10/0565

According to International Patent Classification (IPC) or to both national classification and IPC

**B. FIELDS SEARCHED**

Minimum documentation searched (classification system followed by classification symbols)

H01M4/62; H01M4/36; H01M4/38; H01M10/056; H01M10/0565

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2020/203882 A1 (TEIJIN LTD) 08 October 2020 (2020-10-08)<br>claims, paragraphs [0008]-[0021], [0077]-[0104], examples | 1-2, 12-13<br>2-8, 12-13 |
| X<br>Y | WO 2021/080005 A1 (NGK SPARK PLUG CO., LTD.) 29 April 2021 (2021-04-29)<br>claims, paragraphs [0021]-[0031], fig. 1 | 1-2, 12-13<br>2-8, 12-13 |
| X<br>Y | JP 2020-504420 A (NANOTEK INSTRUMENTS, INC.) 06 February 2020 (2020-02-06)<br>claims, examples | 1, 9-11<br>2-8, 12-13 |
| Y | CN 114914424 A (HUBEI XINGFA CHEMICALS GROUP CO., LTD.) 16 August 2022 (2022-08-16)<br>claims, examples, fig. 8, 10 | 3-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 January 2024** | **23 January 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

INTERNATIONAL SEARCH REPORT

International application No.
PCT/JP2023/039640

C. DOCUMENTS CONSIDERED TO BE RELEVANT

| Category* | Citation of document, with indication, where appropriate, of the relevant passages | Relevant to claim No. |
|---|---|---|
| Y | CN 112420999 A (TIANJIN UNIVERSITY) 26 February 2021 (2021-02-26) claims, examples, fig. 6 | 3-8 |
| A | CN 214378550 U (HUNAN EPOTN TECHNOLOGY CO., LTD.) 08 October 2021 (2021-10-08) entire text | 1-13 |
| A | WO 2021/039946 A1 (FUJIFILM CORP) 04 March 2021 (2021-03-04) entire text | 1-13 |

Form PCT/ISA/210 (second sheet) (July 2022)

**INTERNATIONAL SEARCH REPORT**
**Information on patent family members**

International application No.
**PCT/JP2023/039640**

| Patent document cited in search report | Publication date (day/month/year) | Patent family member(s) | Publication date (day/month/year) |
|---|---|---|---|
| WO 2020/203882 A1 | 08 October 2020 | US 2022/0181632 A1<br>claims, paragraphs [0008]-[0026], [0093]-[0123], examples<br>EP 3950770 A1<br>KR 10-2021-0132151 A<br>CN 113614145 A | |
| WO 2021/080005 A1 | 29 April 2021 | US 2022/0384842 A1<br>claims, paragraphs [0026]-[0036], fig. 1<br>EP 4049974 A1<br>CN 114600291 A<br>KR 10-2022-0071232 A | |
| JP 2020-504420 A | 06 February 2020 | US 2018/0166759 A1<br>claims, examples<br>WO 2018/111807 A1<br>KR 10-2019-0086775 A<br>CN 110268573 A | |
| CN 114914424 A | 16 August 2022 | (Family: none) | |
| CN 112420999 A | 26 February 2021 | (Family: none) | |
| CN 214378550 U | 08 October 2021 | (Family: none) | |
| WO 2021/039946 A1 | 04 March 2021 | CN 114303272 A<br>KR 10-2022-0041887 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022177446 A
- CN 112448100
- CN 110247111
- JP 2004095400 A
- WO 2022113904 A1
- US 6022643 A
- US 5705689 A
- US 6120941 A